(19)

Europäisches
Patentamt

European
Patent Office

Office européen
des brevets

(11) **EP 4 564 871 A1**

(12) **EUROPEAN PATENT APPLICATION**
published in accordance with Art. 153(4) EPC

(43) Date of publication:
**04.06.2025 Bulletin 2025/23**

(21) Application number: **22952507.6**

(22) Date of filing: **29.07.2022**

(51) International Patent Classification (IPC):
**H04W 12/06** (2021.01)   **H04L 9/00** (2022.01)

(52) Cooperative Patent Classification (CPC):
**H04L 9/00; H04W 12/06**

(86) International application number:
**PCT/CN2022/109094**

(87) International publication number:
**WO 2024/021060 (01.02.2024 Gazette 2024/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **GAN, Lu
Dongguan, Guangdong 523860 (CN)**

• **WANG, Huiming
Dongguan, Guangdong 523860 (CN)**
• **WEI, Xuan
Dongguan, Guangdong 523860 (CN)**
• **XU, Weijie
Dongguan, Guangdong 523860 (CN)**
• **SHI, Cong
Dongguan, Guangdong 523860 (CN)**

(74) Representative: **RGTH
Patentanwälte PartGmbB
Neuer Wall 10
20354 Hamburg (DE)**

(54) **AUTHENTICATION METHOD AND DEVICE**

(57)    The present disclosure relates to an authentication method and a device. The method includes: receiving, by a first device, a downlink signal; the downlink signal is used to carry first information, and the first information is generated by a second device based on a first key; authenticating, by a first device, the first information carried in the downlink signal that is received based on a first sequence to obtain an authentication result; the first sequence is generated based on a second key.

Receive, by a first device, a downlink signal; where the downlink signal is used to carry first information, and the first information is generated by a second device based on a first key — S210

Authenticate, by the first device, the first information carried in the downlink signal is received based on a first sequence to obtain an authentication result; where the first sequence is generated based on a second key — S220

FIG. 2

## Description

### TECHNICAL FIELD

The present disclosure relates to the field of communication, and more specifically, to an authentication method and a device.

### BACKGROUND

In a communication scenario, an interaction between two devices usually needs to be carried out in a secure environment, which requires the devices to be authenticated. In the related technical research on the authentication of wireless radio frequency identification system, a related authentication solution based on upper-layer cryptography is proposed. However, how to ensure security in authentication processing becomes a problem that needs to be solved.

### SUMMARY

Embodiments of the present disclosure provide an authentication method, a device, a computer readable storage medium, a computer program product, and a computer program.

The embodiments of the present disclosure provide an authentication method, including:

receiving, by a first device, a downlink signal; where the downlink signal is used to carry first information, and the first information is generated by a second device based on a first key;

authenticating, by the first device based on a first sequence, the first information carried in the downlink signal that is received, so as to obtain an authentication result; where the first sequence is generated based on a second key.

The embodiments of the present disclosure provide an authentication method, including:
sending, by a second device, a downlink signal; where the downlink signal is used to carry first information, and the first information is generated by the second device based on a first key; the first information is used for the first device to perform authentication to obtain an authentication result.

The embodiments of the present disclosure provide a first device, including:

a first communication unit, configured to receive a downlink signal; where the downlink signal is used to carry first information, and the first information is generated by a second device based on a first key;

a first processing unit, configured to authenticate, based on a first sequence, the first information carried in the downlink signal that is received, so as to obtain an authentication result; where the first sequence is generated based on a second key.

The embodiments of the present disclosure provide a second device, including:

a second communication unit, configured to send a downlink signal; where the downlink signal is used to carry first information, and the first information is generated by the second device based on a first key; the first information is used for a first device to perform authentication to obtain an authentication result.

The embodiments of the present disclosure provide a first device, including a processor and a memory. The memory is configured to store a computer program, and the processor is configured to invoke and execute the computer program stored in the memory, so as to enable the first device to perform the above method.

The embodiments of the present disclosure provide a second device, including a processor and a memory. The memory is configured to store a computer program, and the processor is configured to invoke and execute the computer program stored in the memory, so as to enable the second device to perform the above method.

The embodiments of the present disclosure provide a chip for implementing the above method.

Specifically, the chip includes: a processor, configured to invoke a computer program from a memory and execute the computer program, so as to enable a device equipped with the chip to perform the above method.

The embodiments of the present disclosure provide a computer readable storage medium for storing a computer program. The computer program, upon being executed by a device, enables the device to perform the above method.

The embodiments of the present disclosure provide a computer program product, including computer program instructions, the computer program instructions enable a computer to perform the above method.

The embodiments of the present disclosure provide a computer program, where the computer program, upon being executed on a computer, enables the computer to perform the above method.

In the embodiments of the present disclosure, by adopting the solution provided by this embodiment, the first device authenticates the downlink signal carrying the first information based on the first sequence to obtain an authentication result; where the first information is generated by the second device based on the first key, and the first sequence is generated based on the second key. In this way, since a key is used for authentication processing, computational attacks can be avoided and further, the security of the authentication processing is guaranteed.

### BRIEF DESCRIPTION OF THE DRAWINGS

FIG. 1 is a schematic diagram of an application scenario according to the embodiments of the present disclosure.

FIG. 2 is a first flow schematic diagram of an authentication method according to the embodiments of the present disclosure.

FIG. 3 is a second flow schematic diagram of an authentication method according to the embodiments of the present disclosure.

FIG. 4 is a third flow schematic diagram of an authentication method according to the embodiments of the present disclosure.

FIG. 5 is a fourth flow schematic diagram of an authentication method according to the embodiments of the present disclosure.

FIG. 6 is a fifth flow schematic diagram of an authentication method according to the embodiments of the present disclosure.

FIG. 7 is a sixth flow schematic diagram of an authentication method according to the embodiments of the present disclosure.

FIG. 8 is a schematic diagram of an attack scenario according to the embodiments of the present disclosure.

FIG. 9 is a comparative schematic diagram of missed alarm probability curves under multiple antenna numbers according to the present disclosure.

FIG. 10 is a schematic diagram of curves of legitimate signal power and missed alarm probability under multiple antenna numbers according to the present disclosure.

FIG. 11 is a schematic block diagram of a first device according to an embodiment of the present disclosure.

FIG. 12 is a schematic block diagram of a second device according to an embodiment of the present disclosure.

FIG. 13 is a schematic block diagram of a second device according to another embodiment of the present disclosure.

FIG. 14 is a schematic diagram of a zero-power consumption communication system based on back scattering according to an embodiment of the present disclosure.

FIG. 15 is a scenario schematic diagram of a hybrid zero-power consumption communication system based on cellular communication and/or sidelink communication according to an embodiment of the present disclosure.

FIG. 16 is a schematic block diagram of a communication device according to the embodiments of the present disclosure.

FIG. 17 is a schematic block diagram of a chip according to the embodiments of the present disclosure.

FIG. 18 is a schematic block diagram of a communication system according to the embodiments of the present disclosure.

## DETAILED DESCRIPTION

The technical solutions in the embodiments of the present disclosure will be described in conjunction with the drawings in the embodiments of the present disclosure.

The technical solutions of the embodiments of the present disclosure may be applied to various communication systems, such as: Global System of Mobile communication (Global System of Mobile communication, GSM) system, Code Division Multiple Access (Code Division Multiple Access, CDMA) system, Wideband Code Division Multiple Access (Wideband Code Division Multiple Access, WCDMA) system, General Packet Radio Service (General Packet Radio Service, GPRS), Long Term Evolution (Long Term Evolution, LTE) system, Advanced long term evolution (Advanced long term evolution, LTE-A) system, New Radio (New Radio, NR) system, an evolution system of the NR system, LTE-based access to unlicensed spectrum (LTE-based access to unlicensed spectrum, LTE-U) system, NR-based access to unlicensed spectrum (NR-based access to unlicensed spectrum, NR-U) system, Non-Terrestrial Networks (Non-Terrestrial Networks, NTN) system, Universal Mobile Telecommunication System (Universal Mobile Telecommunication System, UMTS), Wireless Local Area Networks (Wireless Local Area Networks, WLAN), Wireless Fidelity (Wireless Fidelity, WiFi) system, fifth-generation communication (5th-Generation, 5G) system or other communication systems, etc.

Generally speaking, a number of connections supported by a conventional communication system is limited and is easy to implement, however, with the development of the communication technology, the mobile communication system will not only support conventional communication, but also support, for example, Device to Device (Device to Device, D2D) communication, Machine to Machine (Machine to Machine, M2M) communication, Machine Type Communication (Machine Type Communication, MTC), Vehicle to Vehicle (Vehicle to Vehicle, V2V) communication, or Vehicle to everything (Vehicle to everything, V2X) communication, etc, and the embodiments of the present disclosure may also be applied to these communication systems.

In a possible implementation, the communication system in the embodiments of the present disclosure may be applied to a carrier aggregation (Carrier Aggregation, CA) scenario, may also be applied to a dual connectivity (Dual Connectivity, DC) scenario, and may also be applied to a standalone (Standalone, SA) network deployment scenario. In a possible implementation, the communication system in the embodiments of the present disclosure may be applied to an unlicensed spectrum, where the unlicensed spectrum may also be considered as a shared spectrum; or the communication system in the embodiments of the present disclosure may also be applied to a licensed spectrum, where the licensed spectrum may also be considered as an unshared spectrum.

The embodiments of the present disclosure describe various embodiments in conjunction with a network device and a terminal device, where the terminal device may also be referred to as a user equipment (User Equipment, UE), an access terminal, a user unit, a user station, a mobile station, a mobile platform, a remote station, a remote terminal, a mobile device, a user terminal, a terminal, a wireless communication device, a user agent or a user apparatus, etc.

The terminal device may be a station (STAION, STA) in the WLAN, may be a cellular phone, a cordless phone, a Session Initiation Protocol (Session Initiation Protocol, SIP) phone, a Wireless Local Loop (Wireless Local Loop, WLL) station, or a personal digital assistant (Personal Digital Assistant, PDA) device, a handheld device and a computing device with a wireless communication function, or other processing devices connected to a wireless modem, a vehicle-mounted device, a wearable device, a terminal device in a next generation communication system such as in an NR network, or a terminal device in a future evolved Public Land Mobile Network (Public Land Mobile Network, PLMN) network, etc. In the embodiments of the present disclosure, the terminal device may be deployed on land, including indoor or outdoor, in handheld, worn, or vehicle-mounted; may also be deployed on water (e.g., on a ship, etc.); may also be deployed in the air (e.g., on an airplane, a balloon, a satellite, etc.). In the embodiments of the present disclosure, the terminal device may be a mobile phone (Mobile Phone), a pad (Pad), a computer with a wireless transceiving function, a Virtual Reality (Virtual Reality, VR) terminal device, an Augmented Reality (Augmented Reality, AR) terminal device, a wireless terminal device in industrial control (industrial control), a wireless terminal device in self driving (self driving), a wireless terminal device in remote medical (remote medical), a wireless terminal device in smart grid (smart grid), a wireless terminal device in transportation safety (transportation safety), a wireless terminal device in smart city (smart city), a wireless terminal device in smart home (smart home), etc. As an example but not a limitation, in the embodiments of the present disclosure, the terminal device may also be a wearable device. The wearable device, which is also referred to as a wearable smart device, is a generic term for a device that may be worn, into which the daily wear is intelligently designed and developed by applying wearable technologies, such as glasses, gloves, watches, clothing, and shoes, etc. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes those with full functions, large size, and entire or partial functions without relying on a smartphone (for example, a smartwatch or smart glasses, etc.), as well as, those that only focus on a certain type of application function and need to be used in conjunction with other devices such as a smartphone (for example, a smart bracelet and smart jewelry for physical sign monitoring).

In the embodiments of the present disclosure, the network device may be a device used for communicating with a mobile device. The network device may be an Access Point (Access Point, AP) in the WLAN, a base station (Base Transceiver Station, BTS) in the GSM or CDMA, may also be a base station (NodeB, NB) in the WCDMA, or may also be an evolutionary base station (Evolutionary Node B, eNB or eNodeB) in the LTE, or a relay station or an access point, or a vehicle-mounted device, a wearable device, and a network device (gNB) in an NR network, or a network device in the future evolved PLMN network or a network device in the NTN network, etc. As an example but not a limitation, in the embodiments of the present disclosure, the network device may have a mobile characteristic, for example, the network device may be a mobile device. Optionally, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, etc. Optionally, the network device may also be a base station provided on land, water, and other places. In the embodiments of the present disclosure, the network device may provide a service for a cell, and the terminal device communicates with the network device through a transmission resource (such as a frequency domain resource, or a frequency spectrum resource) used by the cell. The cell may be a cell corresponding to the network device (such as the base station), the cell may belong to a macro base station or may also belong to a base station corresponding to a small cell (Small cell), and the small cell herein may include: a metro cell (Metro cell), a micro cell (Micro cell), a pico cell (Pico cell), a femto cell (Femto cell), etc., these small cells have characteristics of small coverage range and low transmission power, which are applicable for providing a data transmission service with a high speed.

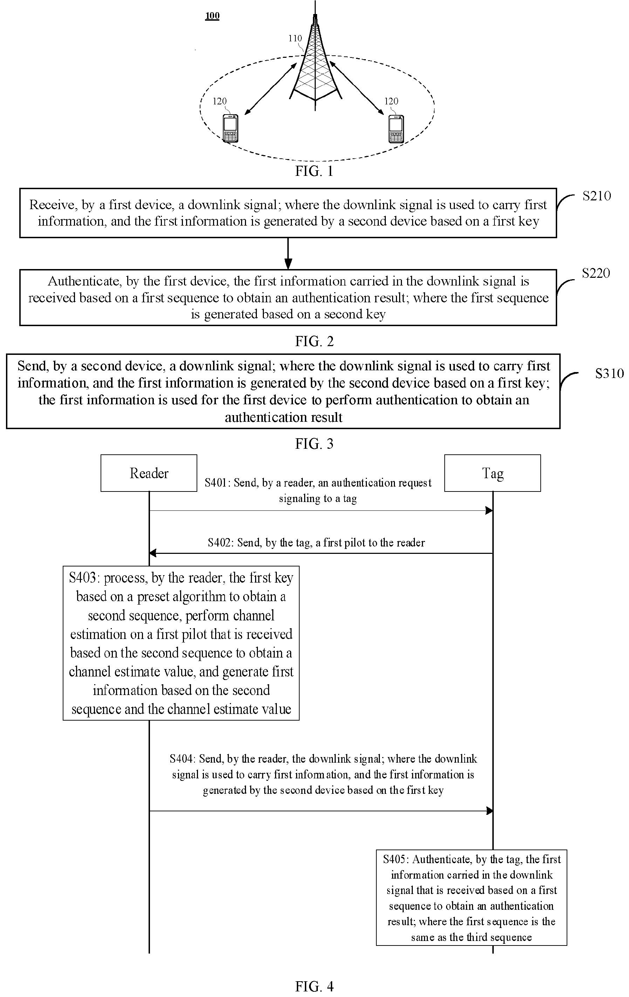

FIG. 1 exemplarily shows a communication system 100. The communication system includes a network device 110 and two terminal devices 120. In a possible implementation, the communication system 100 may include a plurality of network devices 110 and may include another number of terminal devices 120 within a coverage range of each network device 110, which is not limited in the embodiments of the present disclosure. In a possible implementation, the communication system 100 may also include other network entities such as a mobility management entity (Mobility Management Entity, MME) and an access and mobility management function (Access and Mobility Management Function, AMF), etc., which are not limited in the embodiments of the present disclosure. Herein, the network device may include an access network device and a core network device. That is, the wireless communication system also includes a plurality of core networks for communicating with the access network device. The access network device may be an evolved base station (evolutional node B, which may be abbreviated as eNB or e-NodeB) in a long-term evolution (long-term evolution, LTE) system, a next-generation (mobile communication system) (next radio, NR) system or an authorized auxiliary access long-term evolution (authorized auxiliary access long-term evolution, LAA-LTE) system, a macro base station, a micro base station (also referred to as a "small base station"), a pico base station, an access point (access point, AP), a transmission point (transmission point, TP) or a new generation Node B (new generation Node B, gNodeB), etc.

It should be understood that, in the embodiments of the present disclosure, a device with a communication function in the network/system may be referred to as a communication device. Taking the communication system shown in FIG. 1 as an example, the communication device may include a network device and terminal devices with communication functions, and the network device and the terminal devices may be specific devices in the embodiments of the present disclosure, which will not be repeated herein; the communication device may also include other devices in the communication system, such as a network controller, a mobility management entity, and other network entities, which are not limited in the embodiments of the present disclosure.

It should be understood that the terms herein "system" and "network" are often used interchangeably herein. The term herein "and/or" is only an association relationship to describe associated objects, meaning that there may be three kinds of relationships, for example, A and/or B may mean three cases where: A exists alone, both A and B exist, and B exists alone. In addition, a character "/" herein generally means that related objects before and after "/" are in an "or" relationship.

It should be understood that the "indication" and variations thereof mentioned in the embodiments of the present disclosure may be a direct indication, may also be an indirect indication, or may also represent having an association relationship. For example, A indicates B, which may mean that A directly indicates B, for example, B may be acquired by A; may also mean that A indirectly indicates B, for example, A indicates C, and B may be acquired by C; or may also mean that there is an association relationship between A and B.

To facilitate the understanding of the technical solutions of the embodiments of the present disclosure, the relevant technologies of the embodiments of the present disclosure are described below. The following related technologies may be arbitrarily combined with the technical solutions of the embodiments of the present disclosure as optional solutions, which all belong to the protection scope of the embodiments of the present disclosure.

Research on identity authentication of wireless radio frequency identification systems is mainly classified into two major directions, i.e., an authentication solution based on upper-layer cryptography and an authentication solution based on an underlying physical layer, respectively. Herein, in the authentication solution based on the upper-layer cryptography, a radio frequency identification (Radio Frequency Identification, RFID) authentication protocol of the upper-layer cryptography is roughly divided into five types according to the computational overhead and operations supported by a tag: a first type is a high-complexity protocol, which needs to support a conventional encryption function; a second type is a general complexity protocol, where the authentication protocol tag of this type needs to support a random number generator and a one-way hash function; a third type is a lightweight protocol, where the tag of this type of authentication protocol needs to support a lightweight encryption algorithm of the National Institute of Standards and Technology (National Institute of Standards and Technology, NIST); a fourth type is a lightweight protocol, which means that the authentication protocol only requires a random number generator and a simple function, such as a cyclic redundancy check (Cyclic Redundancy Check, CRC) checksum, but does not support a hash function; a fifth type is an ultra-lightweight protocol, which means that the authentication protocol involves only simple bit operations such as XOR and rotation.

However, the above authentication solution based on the upper-layer cryptography may have problems such as being unable to resist computational attacks, occupying additional communication overhead and reducing data throughput. Specifically, the authentication solution based on upper-layer cryptography essentially determines whether there is an attack by verifying whether a parameter satisfies a preset matching condition, and security thereof comes from the difficulty of solving mathematical problems. An attacker may obtain verification material encrypted with a key. If the attacker improves the computational ability, there is a possibility of being cracked. Therefore, the above authentication solution of the upper-layer cryptography may have the problem of being unable to resist computing attacks. In addition, the authentication solution based on the upper-layer cryptography requires the exchange of an additional message bit carrying identity authentication information between legitimate communicating parties. In a zero-power consumption system dominated by small data packets, deploying an authentication solution based on the upper-layer cryptography will take up a lot of additional communication overhead and further, reduce data throughput.

In the description of the embodiments of the present disclosure, the term "correspondence" and variations thereof may mean that there is a direct correspondence or indirect correspondence between the two, may also mean that there is an associated relationship between the two, or may also mean a relationship of indicating and being indicated or a relationship of configuring and being configured, etc.

To facilitate the understanding of the technical solutions of the embodiments of the present disclosure, the relevant technologies of the embodiments of the present disclosure are described below. The following related technologies may be arbitrarily combined with the technical solutions of the embodiments of the present disclosure as optional solutions, which all belong to the protection scope of the embodiments of the present disclosure.

FIG. 2 is a schematic flow chart of an authentication method according to an embodiment of the present disclosure. The method may optionally be applied to a system shown in FIG. 1, but is not limited thereto. The method includes at least part of the following content.

S210, receiving, by a first device, a downlink signal; where the downlink signal is used to carry first information, and the first information is generated by a second device based on a first key.

S220, authenticating, by the first device based on a first sequence, the first information carried in the downlink signal that is received, so as to obtain an authentication result; where the first sequence is generated based on a second key.

FIG. 3 is a schematic flow chart of an authentication method according to another embodiment of the present disclosure. The method may optionally be applied to a system shown in FIG. 1, but is not limited thereto. The method includes at least part of the following content.

S310, sending, by a second device, a downlink signal; where the downlink signal is used to carry first information, and the first information is generated by the second device based on a first key; the first information is used for the first device to perform authentication to obtain an authentication result.

In various embodiments of the present disclosure, the first device and the second device may be different in different scenarios. For example, the first device may specifically be a zero-power consumption device, such as a Tag, and the second device may be a Reader. Exemplarily, the second device (i.e., reader) may be any one of a network device, a user equipment (User Equipment, UE), a customer premise equipment (Customer Premise Equipment, CPE), etc.; correspondingly, the first device, i.e., a zero-power consumption device, may be any one of an Internet of Things (Internet of Things, IoT) device, a passive Internet of Things (Passive Internet of Things, Passive IoT) device, etc. It should be understood that the above is only an exemplary description, and in actual processing, the first device and the second device may also be other types of devices, which is not exhaustive herein.

In a preferred example, the aforementioned second device may be a network device, and the network device may specifically be an access network device (such as a base station, eNB, gNB, etc.). Further, the second device may specifically be a network device with a plurality of antennas. Specifically, the second device may specifically be an access network device with a plurality of antennas.

Before the first device performs the aforementioned S210, and before the second device performs the aforementioned S310, the processing of the second device may further include: sending, by the second device, an authentication request signaling to the first device; the authentication request signaling may be used to supply power to the first device and for the first device to determine to initiate entering an authentication process. Correspondingly, the processing of the first device may further include: receiving, by the first device, the authentication request signaling sent from the second device, and initiating entering the authentication process. This is because the first device is a zero-power consumption device, so the second device needs to send the authentication request signaling to the first device to supply power to the first device and further, enable the first device to initiate the authentication process. Herein, the authentication process may include the first device performing the aforementioned processing of S210 to S220, and correspondingly, the second device performing the aforementioned processing of S310.

Optionally, after the second device sends the authentication request signaling to the first device, the aforementioned S310 may be directly performed, that is, the downlink signal is directly sent; correspondingly, the first device performs the aforementioned S210.

Optionally, after the first device receives the aforementioned authentication request signaling, and before the aforementioned S210 is performed, the authentication method may further include: processing, by the first device, the second key based on a preset algorithm to obtain a third sequence; and sending, by the first device, a first pilot carrying the third sequence. Correspondingly, the second device receives the first pilot.

The third sequence may be specifically represented as: $s = diag(s_{t1}, \cdots, s_{tL})$; where $s$ represents the third sequence, L is a length of the third sequence, $s_{tn}$ represents a value of the n-th bit in the third sequence, and n is an integer greater than or equal to 1 and less than or equal to L, that is, "$s_{t1}, \cdots, s_{tL}$" represents a value of each bit in the third sequence. It should be understood that the length L of the aforementioned third sequence may be a positive integer greater than or equal to 1, and may be preset according to actual conditions.

Herein, the second key may be pre-configured on the first device. In an example, the second key may be unchanged; in yet another example, the second key may be a key obtained based on a keystream generator.

Herein, the preset algorithm may be set according to actual conditions, where the preset algorithm may be one of: a random number algorithm, or a cryptographic algorithm. The random number algorithm may be an algorithm specified in an Electronic Product Code (EPCTM) protocol, and may specifically be implemented by a pseudo-random number generator specified in the protocol, which is not limited herein. The cryptographic algorithm may be: a lightweight cryptographic algorithm; exemplarily, the lightweight cryptographic algorithm may include any one of: an SPECK algorithm, or an SIMON algorithm; it should be understood that this is only an exemplary explanation of the cryptographic algorithm, and any other types of cryptographic algorithm may be used in actual processing, all of which are within the protection scope of the present embodiment, but are not exhaustive.

Exemplarily, assuming that the preset algorithm is a random number algorithm, specifically implemented based on a pseudo-random number generator, the first device processing the second key based on the preset algorithm to obtain a third sequence, may be specifically implemented by using the following formula: $s = PRNG(K_2)$; where $K_2$ represents the second key; $PRNG(\cdot)$ represents the random number algorithm used by the pseudo-random number generator; $s$ represents the third sequence. Exemplarily, assuming that the preset algorithm is a lightweight cryptographic algorithm, the first device processing the second key based on the preset algorithm to obtain a third sequence, may be specifically implemented by using the following formula: $s = MAC(K_2)$; where $K_2$ represents the second key; $MAC(\cdot)$ represents the lightweight cryptographic algorithm; and $s$ represents the third sequence.

It should be pointed out that in the embodiments of the present disclosure, no matter which of the above preset algorithms is adopted, the first device and the second device are required to adopt the same preset algorithm during processing. For example, the first device and the second device both adopt the SIMON algorithm. For another example, the first device and the second device both adopt the random number algorithm. As long as the first device and the second device use the same preset algorithm, it is within the protection scope of the embodiments of the present disclosure, and all possible conditions are not exhaustive herein.

The sending, by the first device, the first pilot carrying the third sequence may refer that the first device performs signal modulation based on the third sequence to generate the first pilot and send the first pilot. For example, the third sequence may be modulated onto a carrier to obtain the first pilot, and the specific modulation manner is not limited to the present embodiment.

The downlink signal sent from the second device may carry different contents in different scenarios, and the first device may also perform different processing based on the downlink signal carrying different contents. Various implementations in combination with different scenarios are explained below.

In a possible implementation, the downlink signal is only used to carry the first information.

Specifically, the first information is generated by the second device based on a second sequence, and the second sequence is generated based on the first key.

Optionally, the second device receives the first pilot; after receiving the first pilot, the second device performs the aforementioned S310.

The first information is generated by the second device based on a channel estimate value and the second sequence; the channel estimate value is obtained by the second device performing channel estimation on the first pilot that is received based on the second sequence. Specifically, in the aforementioned S320, the sending, by the second device, a downlink signal may include: processing, by the second device, the first key based on a preset algorithm, so as to obtain a second sequence; generating, by the second device, the first information based on the second sequence; and sending, by the second device, the downlink signal carrying the first information. Herein, the generating, by the second device, the first information based on the second sequence includes: performing, by the second device, channel estimation on the first pilot that is received based on the second sequence to obtain a channel estimate value; generating, by the second device, the first information based on the second sequence and the channel estimate value.

Herein, a dimension of the channel estimate value is related to a number of antennas of the second device.

The first pilot received by the second device is a signal containing Gaussian noise on the second device side after channel transmission. Specifically, the first pilot received by the second device may be represented as:

$$Y_R = [y_1, \cdots, y_L]_{r \times L} = H_{TR} s + N_R$$

Herein, $Y_R$ is the first pilot received by the second device, $H_{TR}$ may be a channel estimate matrix

$$H_{TR} = \begin{bmatrix} H_1 & \cdots & H_1 \\ \vdots & \cdots & \vdots \\ H_r & \cdots & H_r \end{bmatrix}_{r \times L}$$ between the first device and the second device; r is the number of antennas of the second device, r is a positive integer greater than or equal to 1; $N_R$ is the Gaussian noise on the second device side,

and $N_R \sim CN\left(0, \sigma_N^2\right)$, $\sigma_N^2$ is the noise power; and s is the third sequence carried by the first pilot.

Herein, the preset algorithm is the same as the preset algorithm used by the aforementioned first device, which has been specifically described in the aforementioned embodiments and will not be repeated herein.

The first key is a key preset on the second device side. Preferably, the first key is the same as the aforementioned second key. Exemplarily, the first key may be unchanged. Exemplarily, the first key may be a key obtained based on a keystream generator; it should be understood that if the second key is a key obtained based on the keystream generator, the first key is also a key obtained by the keystream generator, that is, the first device and the second device generate keys, respectively. In this case, it is necessary to ensure that the keys generated by the first device and the second device in an interaction are the same. For example, the first device generates a second key for the first time based on the keystream generator, and generates a first pilot based on the second key and sends the first pilot; accordingly, when the second device receives the first pilot, the second device generates the first key for the first time based on the keystream generator. Since in this interaction, the first device and the second device both generate keys for the first time, the second key and the first key should theoretically be the same.

The processing, by the second device, the first key based on the preset algorithm to obtain a second sequence, specifically may be, directly calculating, by the second device with the first key and based on the preset algorithm to obtain the second sequence. The aforementioned second sequence may be specifically represented as: $s_R = diag(s_{R_1}, \cdots, s_{R_L})$; where $s_R$ represents the second sequence, L is a length of the second sequence, and the length of the second sequence is the same as the length of the aforementioned third sequence; $s_{R_n}$ represents a value of the n-th bit in the second sequence, n is an integer greater than or equal to 1 and less than or equal to L, that is, "$s_{R_1}, \cdots, s_{R_L}$" represents the value of each bit in the second sequence; if the second key is the same as the first key and uses the same preset algorithm, then the value $s_{R_n}$ of the n-th bit in the aforementioned second sequence should be the same as the value $s_{t_n}$ of the n-th bit in the third sequence.

Assuming that the preset algorithm is a random number algorithm, specifically implemented based on a pseudo-random number generator, the second device processing the first key based on the preset algorithm to obtain a second sequence, may be specifically implemented by using the following formula: $s_R = PRNG(K_1)$; where $K_1$ represents the first key; $PRNG(\cdot)$ represents the random number algorithm used by the pseudo-random number generator; $s_R$ represents the second sequence. Assuming that the preset algorithm is a lightweight cryptographic algorithm, the second device processing the first key based on the preset algorithm to obtain a second sequence, may be specifically implemented by using the following formula: $s_R = MAC(K_1)$; where $K_1$ represents the first key; $MAC(\cdot)$ represents the lightweight cryptographic algorithm; $s_R$ represents the second sequence. It should be understood that this is only an exemplary explanation and all possible preset algorithms are not exhaustive herein.

The second device performing channel estimation on the first pilot that is received based on the second sequence to obtain a channel estimate value may specifically be that the second device divides the first pilot that is received by the second sequence to obtain a channel estimate value. Herein, the channel estimate value obtained by the second device is represented as $\hat{H}$; if the second sequence generated by the second device is the same as the third sequence in the first pilot, then the obtained channel estimate value $\hat{H}$ should be approximate to the aforementioned channel estimate matrix $H_{TR}$.

The aforementioned embodiments have described that the second device may be a network device, specifically an access network device, such as any one of a base station, an eNB, and a gNB; the access network device usually has multiple antennas, so the second device of the present embodiment may be a device with multiple antennas. Assuming that the number of antennas of the second device is r, the dimensions of the aforementioned channel estimate value $\hat{H}$ and the aforementioned channel estimate matrix H are both r (r is a positive integer greater than or equal to 1). In the present implementation, the channel estimate value is represented as: $\hat{H} = [\hat{H}_1, \ldots, \hat{H}_r]^T$; assuming that the i-th bit in the channel estimate value is represented as $\hat{H}_i$, the i-th bit may represent the channel estimate value corresponding to the i-th antenna, i is an integer greater than or equal to 1 and less than or equal to r, and the length of $\hat{H}_i$ is equal to L.

The second device generating the first information based on the second sequence and the channel estimate value may be that the second device calculates with the second sequence and the channel estimate value and based on a first preset function to generate the first information.

Herein, the first preset function may be represented as X, and the corresponding first information X may be represented as: $X = \chi(s_R, \hat{H})$. Specifically, the calculation of the first preset function may be that the second sequence is divided by the channel estimate value corresponding to each antenna in the channel estimate value, and the processing of obtaining the first information X may be represented by the following formula:

$$X = \begin{bmatrix} \dfrac{s_{R_1}}{\hat{H}_1} & \cdots & \dfrac{s_{R_L}}{\hat{H}_1} \\ \vdots & \cdots & \vdots \\ \dfrac{s_{R_1}}{\hat{H}_r} & \cdots & \dfrac{s_{R_L}}{\hat{H}_r} \end{bmatrix};$$

where $s_{R_n}$ represents a value of the n-th bit in the second sequence, n is an integer greater than or equal to 1 and less than or equal to L, that is, "$s_{R_1}, \cdots, s_{R_L}$" represents a value of each bit in the second sequence; any one of $\hat{H}_1$ to $\hat{H}_r$ may be represented as $\hat{H}_i$, and explanation thereof is the same as that of the aforementioned embodiments and will not be repeated herein.

After the aforementioned first information is obtained, the second device may carry the first information through a downlink signal and send the first information to the first device. Herein, the downlink signal may be a radio frequency signal. For example, the second device may carry the first information in the downlink signal through modulation. The specific modulation manner is not limited herein.

After the first device receives the downlink signal, the aforementioned S220 may be performed, and the authenticating, by the first device, the first information carried in the downlink signal that is received based on the first sequence to obtain an authentication result includes: in a case where a similarity between the first sequence and the first information carried by the downlink signal that is received satisfies a preset condition, determining, by the first device that, the authentication result is an authentication pass; and/or, in a case where a similarity between the first sequence and the first information carried by the downlink signal that is received does not satisfy the preset condition, determining, by the first device that, the authentication result is an authentication failure.

Herein, the first sequence is the same as the aforementioned third sequence, that is, the aforementioned first device may generate a third sequence and save the third sequence upon performing S210; when the first device performs S220, the third sequence is used as the first sequence, and the first information in the downlink signal that is received is authenticated based on the first sequence to obtain an authentication result. It should be understood that in the present implementation, although the first sequence is the same as the third sequence, for the sake of understanding, the first sequence is represented as $s_T$.

The downlink signal received by the first device is different from the downlink signal sent from the aforementioned second device. This is because the downlink signal received by the first device is also a downlink signal after channel transmission.

In the present implementation, the downlink signal received by the first device is represented as: $y_T = [y_1, \cdots, y_L] = H_{RT}X + N_T$; where $N_T$ is the Gaussian noise

$$N_T \sim \mathrm{CN}\left(0, \sigma_N^2\right), \quad \sigma_N^2$$

on the first device side, is the noise power, where the distribution mean of $N_T$ is represented as CN (0, $\sigma_N^2$), and the variance is $\sigma_N^2$; X is the aforementioned first information; $H_{RT}$ is the channel estimate matrix between the second device and the first device.

If the channel between the first device and the second device satisfies reciprocity, $H_{RT} = H_{TR}$, that is the channel estimate matrices on the first device side and the second device side are the same. Based on the explanation of the aforementioned embodiment, it can be seen that X is obtained by $s_R$ dividing by the channel estimate value $\hat{H}$. Therefore, if the channel estimate value obtained on the second device side is approximately the same as $H_{TR}$, then $y_T = s_R + N_T$ may be finally obtained.

The similarity between the first sequence and the first information carried in the downlink signal that is received may be calculated based on Euclidean distance, or based on cosine similarity, or based on Manhattan distance, or based on Chebyshev distance, or based on Jaccard distance, or other manners, which are not exhaustive herein. Correspondingly, the preset condition may be that the similarity is within a preset certain range. Herein, the corresponding preset condition may be set according to the actually adopted similarity calculation manner, which is not limited in the present embodiment.

In a preferred example, the method also includes: performing, by the first device, calculation based on the first sequence and the first information carried in the downlink signal that is received to obtain a first numerical value; in a case where the first numerical value is within a preset threshold range, determining, by the first device that, the similarity between the first sequence and the first information carried in the downlink signal that is received satisfies a preset condition. In addition, the method may further include: in a case where the first numerical value is not within the preset threshold range, determining that the similarity between the first sequence and the first information carried in the downlink signal that is received does not satisfy the preset condition.

The first device performs calculation based on the first sequence and the first information in the downlink signal that is received to obtain a first numerical value, where the calculation may adopt the following formula: $t = \mathrm{R}\left(y_T s_T^{\mathrm{T}}\right)$; where R $(\cdot)$ represents the real part; $y_T$ represents the first information, and representation manner thereof has been described in the aforementioned embodiments and will not be repeated herein; $s_T$ represents the first sequence, $s_T^{\mathrm{T}}$ represents a transpose of the first sequence; t represents the first numerical value. Furthermore, $y_T = s_R + N_T$ has been described above, after substituting $y_T$ into the aforementioned formula,

$$t = s_R s_T^{\mathrm{T}} + \mathrm{R}\left(N_T s_T^{\mathrm{T}}\right) \sim \mathrm{N}\left(s_R s_T^{\mathrm{T}}, \sigma_0^2\right)$$ may be obtained. Specifically, in the $y_T = s_R + N_T$, $s_R$ is a real number, then the $s_R$ is multiplied with $s_T^{\mathrm{T}}$ to obtain a real number; $N_T$ is the Gaussian noise on the first device side, which may be a complex number, and there may be an imaginary part in the multiplication of $N_T s_T^{\mathrm{T}}$, so R $(\cdot)$ is used to represent that only the real part after the multiplication calculation is retained. The following assumptions need to be made on the first device side: $H_0$: the downlink signal (or the first information in the downlink signal) comes from a legitimate reader (i.e., a legitimate second device); $H_1$: the downlink signal (or the first information in the downlink signal) does not come from a legitimate reader (i.e., a legitimate second device); under the assumption $H_0$, the aforementioned first numerical value (i.e., t) is a Gaussian random variable, and distribution thereof is represented as "

$$\sim N\left(s_R s_T{}^T, \sigma_0^2\right)$$ ", that is, the mean of t is the product of $s_R$ and $s_T{}^T$, and the variance is $\sigma_0^2$; where $\sigma_0^2$ may specifically be $\sigma_0^2 = \dfrac{L\sigma_N^2}{2}$, the explanations of L and $\sigma_N^2$ are the same as those in the aforementioned embodiments, which will not be repeated herein.

The aforementioned preset threshold range may be obtained based on a given target false alarm probability, the target false alarm probability may be set according to actual conditions, for example, the target false alarm probability is less than 0.05, or less than 0.01, or larger or smaller, which is not limited herein.

That is, it is judged on the first device side whether the first numerical value t calculated by the downlink signal that is received and the first sequence generated locally by the first device is within a preset threshold range; if the first numerical value t is within the preset threshold range, it is judged to be true, and thus, the similarity between the first sequence and the first information in the downlink signal that is received is determined to satisfy a preset condition, and then the authentication result is determined to be an authentication pass. In addition, if the first numerical value t is not within the preset threshold range, it is determined that the similarity between the first sequence and the first information in the downlink signal that is received does not satisfy a preset condition, and then the authentication result is determined to be an authentication failure. Furthermore, the aforementioned preset threshold range may be less than or equal to a preset value $\Gamma$; accordingly, if the first device determines that the aforementioned first numerical value t is less than $\Gamma$, it is determined that the first numerical value t is within the preset threshold range.

Optionally, after the second device sends the authentication request signaling to the first device, the aforementioned S310 may be directly performed, that is, the downlink signal is directly sent; correspondingly, the first device performs the aforementioned S210. Herein, the first information may only contain the aforementioned second sequence. The sending, by the second device, the downlink signal includes: processing, by the second device, the first key based on a preset algorithm to obtain a second sequence; generating, by the second device, the first information based on the second sequence; and sending, by the second device, the downlink signal carrying the first information. The manner for generating the second sequence is the same as those of the aforementioned embodiments, which will not be repeated herein. In this case, the manner in which the first device generates the first sequence after receiving the downlink signal, and the processing of authenticating the first information carried in the downlink signal that is received based on the first sequence are the same as those in the aforementioned embodiments, except that in the present implementation, the aforementioned first information X is not calculated by using the channel estimate value, and correspondingly, when the first device side performs calculation based on the first sequence and the first information carried in the downlink signal that is received to obtain the first numerical value, the first numerical value may be different from the aforementioned value, and thus the adpoted preset threshold range may be different, which is not specifically limited herein.

In the present implementation, the processing of the first device may further include: in a case where the authentication result is an authentication pass, sending, by the first device, an uplink signal carrying first uplink service data. Correspondingly, the processing of the second device may further include: receiving, by the second device, an uplink signal carrying the first uplink service data sent from the first device.

Herein, in a case where the authentication result is an authentication pass, the sending, by the first device, the uplink signal carrying the first uplink service data may specifically include: in a case where the authentication result is the authentication pass, judging, by the first device, that whether there is uplink service data to be transmitted, and if so, taking the uplink service data to be transmitted as the first uplink service data, and sending the uplink signal carrying the first uplink service data.

That is, if the first device performs authentication based on the aforementioned downlink signal and obtains an authentication result of the authentication pass, it can be determined that the second device is a legitimate device. Therefore, in a case where there is uplink service data to be transmitted, the first uplink service data may be carried in the uplink signal and further, sent to the second device; accordingly, after the second device receives the uplink signal carrying the first uplink service data, the second device may parse the uplink signal and obtain the first uplink service data transmitted this time for subsequent processing. The processing that may be performed will not be repeated herein.

In addition, the processing of the first device may further include: in a case where the authentication result is an authentication failure, the first device may end the processing and wait for the next authentication request signaling to be received for the next processing.

In conjunction with FIG. 4, taking the first device as a tag and the second device as a reader as an example, solutions provided by the present implementation are exemplarily explained as S401 to S405.

S401: sending, by a reader, an authentication request signaling to a tag.

The authentication request signaling is used to supply power to the tag and enables the tag to initiate the authentication process.

S402: sending, by the tag, a first pilot to the reader.

Herein, the first pilot carries a third sequence $s = diag(s_{t1}, \cdots, s_{tL})$; the third sequence is obtained by the tag processing the second key based on a preset algorithm. The specific explanations for generating the third sequence and sending the first pilot are the same as those in the aforementioned embodiments, which will not be repeated herein.

S403: processing, by the reader, the first key based on a preset algorithm to obtain a second sequence, performing channel estimation on a first pilot that is received based on the second sequence to obtain a channel estimate value, and generating first information based on the second sequence and the channel estimate value.

The first pilot received by the reader may be represented as $Y_R = [y_1, \cdots, y_L]_{r \times L} = H_{TR}s + N_R$. The specific explanation of the $Y_R$ is the same as those in the aforementioned embodiments, which will not be repeated herein.

Herein, the explanations of the first key and the second key are the same as those of the aforementioned embodiments, which will not be repeated herein; the manner of generating the channel estimate value, the second sequence, and the first information is the same as those of the aforementioned embodiments, which will not be repeated.

S404: sending, by the reader, a downlink signal; where the downlink signal is used to carry first information, and the first information is generated by the second device based on the first key.

The first information is generated by the second device based on the second sequence, and the second sequence is generated based on the first key. Specifically, the first information is generated by the second device based on a channel estimate value and the second sequence; the channel estimate value is obtained by performing channel estimation on the first pilot that is received by the second device based on the second sequence.

S405: authenticating, by the tag, the first information carried in the downlink signal that is received based on a first sequence to obtain an authentication result; where the first sequence is the same as the third sequence.

The manner for checking whether a pilot sequence (e.g., the first pilot) comes from a legitimate reader is to determine whether the test statistic t calculated from the received signal and the local private pilot is within a threshold range. If $t < \Gamma$, it is judged to be true and the downlink service command is executed; otherwise, it is false and thus, the authentication fails.

In addition, after completing S405 to obtain the authentication result, if the authentication result is an authentication pass, the tag may determine that the reader is a legitimate reader, and then send an uplink signal carrying the first uplink service data. Correspondingly, the reader receives the uplink signal carrying the first uplink service data sent from the tag, and the reader may perform subsequent processing on the first uplink service data, which will not be repeated herein.

In another possible implementation, the downlink signal not only carrys the first information, but also a first downlink service command.

In the present implementation, the first downlink service command is an original downlink service command to be sent from the second device to the first device; the specific content thereof is not limited in present embodiment.

Optionally, the second device receives the first pilot; after the first pilot is received, the second device performs the aforementioned S310.

The first information is generated by the second device based on a channel estimate value and the second sequence; the channel estimate value is obtained by the second device performing channel estimation on the first pilot that is received based on the second sequence. In the aforementioned S310, the sending, by the second device, the downlink signal may include: processing, by the second device, the first key based on a preset algorithm to obtain a second sequence; generating, by the second device, the first information based on the second sequence; and sending, by the second device, the downlink signal carrying the first information. Herein, the generating, by the second device, the first information based on the second sequence includes: performing, by the second device, channel estimation on the first pilot that is received based on the second sequence to obtain a channel estimate value; generating, by the second device, the first information based on the second sequence and the channel estimate value.

The specific explanation of the first pilot received by the second device is the same as those in the aforementioned embodiments and will not be repeated; it should be understood that, in the present implementation, the first pilot received by the aforementioned second device is also the same as those in the aforementioned embodiments and may be represented as: $Y_R = [y_1, \cdots, y_L]_{r \times L} = H_{TR}s + N_R$, and the parameter definitions therein are also the same as those in the aforementioned embodiment and will not be repeated.

The difference from the aforementioned embodiments is that, in present implementation, the second sequence is generated by the second device based on the first key and the first downlink service command. Specifically, the processing, by the second device, the first key based on a preset algorithm to obtain a second sequence includes: processing, by the second device based on the preset algorithm, the first key and the first downlink service command to obtain the second sequence.

Exemplarily, assuming that the preset algorithm is a random number algorithm, specifically implemented based on a pseudo-random number generator; then processing, by the second device based on the preset algorithm, the first key and the first downlink service command to obtain the second sequence may include: performing, by the second device, calculation to obtain a first cyclic redundancy check code based on the first downlink service command; calculating with the first key and the first cyclic redundancy check code to obtain the second sequence based on the random number algorithm. Herein, the first cyclic redundancy check code calculated by the second device based on the first downlink service command may be generated by using a preset cyclic redundancy encoder, and the preset cyclic redundancy encoder may be a cyclic redundancy encoder inherent in or specified in the EPC protocol, the specific processing manner of which is not limited in the present embodiment.

In this example, the calculation manner for obtaining the second sequence may be represented by the following formula: $s_R = PRNG(K_1, CRC(Command_1)_1)$; where $K_1$ represents the first key; $Command_1$ represents the first downlink service command; $PRNG(\cdot)$ represents the random number algorithm used by the pseudo-random number generator, $CRC(\cdot)$ is the cyclic redundancy encoder inherent in the EPCTM protocol, that is, $CRC(Command_1)_1$ is the first cyclic redundancy check code; $s_R$ represents the second sequence. Exemplarily, assuming that the preset algorithm is a lightweight cryptographic algorithm; then the processing, by the second device based on the preset algorithm, the first key and the first downlink service command to obtain the second sequence, may include: calculating, by the second device with the first key and the first downlink service command based on the lightweight cryptographic algorithm to obtain the second sequence. In this example, the manner for obtaining the second sequence may be represented by the following formula: $s_R = MAC(K_1, Command_1)$; where $K_1$ represents the first key; $Command_1$ represents the first downlink service command; $MAC(\cdot)$ represents a lightweight cryptographic algorithm; $s_R$ represents the second sequence. It should be understood that this is merely an exemplary explanation and all possible processing of the preset algorithms is not exhaustive herein.

The second sequence obtained based on the processing of the present implementation may be represented in the same way as the aforementioned second sequence, that is: $s_R = diag(s_{R_1}, \cdots, s_{R_L})$, and the specific definitions of the parameter therein are not repeated herein.

The second device performing channel estimation on the first pilot that is received based on the second sequence to obtain a channel estimate value may specifically be that, the second device divides the received first pilot by the above second sequence to obtain a channel estimate value. Herein, the channel estimate value obtained by the second device is represented as $\hat{H}$; if the second sequence generated by the second device is the same as the third sequence in the first pilot, then the obtained channel estimate value $\hat{H}$ should be approximate to the aforementioned channel estimate matrix $H_{TR}$.

It should be noted that compared with the aforementioned processing manner of generating the second sequence only based on the first key, the channel estimate value obtained by the second device in present implementation is different from those in the aforementioned embodiments due to the different manner of generating the second sequence. However, the specific processing manner for the second device to obtain the channel estimate value is the same as those in the aforementioned embodiments, so the specific processing manner will not be repeated herein.

The generating, by the second device, the first information based on the second sequence and the channel estimate value may be that calculating, by the second device with the second sequence and the channel estimate value based on a first preset function to generate the first information. Herein, the first preset function may be represented as X, and the corresponding first information X may be represented as: $X = \chi(s_R, \hat{H})$, and specific explanation thereof is the same as those in the aforementioned embodiments, which will not be repeated herein.

It should be noted that compared with the aforementioned processing manner of generating the second sequence only based on the first key, the specific content of the first information obtained by the second device in the present implementation is different from those in the aforementioned embodiments due to the different manner of generating the second sequence. However, the specific processing manner for the second device to obtain the first information and the first preset function are the same as those in the aforementioned embodiments, which will not be repeated herein.

The second device may carry the first information through a first signal portion of the downlink signal, carry a first downlink service command through a second signal portion of the downlink signal, and send the downlink signal to the first device. Herein, the downlink signal may be a radio frequency signal, and the second device may carry the first information and the first downlink service command in the downlink signal through modulation, and the downlink signal may be a first signal portion and a second signal portion divided in time domain, for example, the first signal portion may be transmitted first and then the second signal portion, or vice versa, all of which are within the protection scope of the present embodiment, and the specific modulation manner used by the second device is not limited herein. After the first device receives the downlink signal, the aforementioned S220 may be performed, where the first device authenticates the first information carried in the downlink signal that is received based on the first sequence to obtain an authentication result.

Herein, the first sequence is different from the aforementioned third sequence, and the manner in which the first device generates the first sequence may include: processing, by the first device, the second key and the first downlink service command based on a preset algorithm to obtain the first sequence.

Before the processing, by the first device, the second key and the first downlink service command based on a preset algorithm to obtain the first sequence may include: acquiring, by the first device, the first downlink service command from the downlink signal that is received.

The preset algorithms adopted by the first device and the second device are the same. Assuming that the preset algorithm adopted by the first device and the second device is a random number algorithm, specifically implemented based on a pseudo-random number generator; then processing, by the first device, the second key and the first downlink service command based on the preset algorithm to obtain the first sequence may include: performing, by the first device, calculation to obtain a second cyclic redundancy check code based on the first downlink service command; calculating based on the random number algorithm with the second key and the second cyclic redundancy check code to obtain the first sequence. Herein, the second cyclic redundancy check code calculated by the first device based on the first downlink service command may be generated by using a preset cyclic redundancy encoder, and the preset cyclic redundancy encoder may be a cyclic redundancy encoder inherent in or specified in the EPC protocol, and the specific processing manner of which is not limited in the present embodiment. Herein, the calculation manner for obtaining the first sequence may be represented by the following formula: $s_T = PRNG(K_2, CRC(Command_1)_2)$; where $K_2$ represents the second key; $Command_1$ represents the first downlink service command; $PRNG(\cdot)$ represents the random number algorithm used by the pseudo-random number generator, $CRC(\cdot)$ is the cyclic redundancy encoder inherent in the EPCTM protocol; $s_T$ represents the first sequence. Herein, if the first downlink service command parsed by the first device is the same as the first downlink service command transmitted from the second device, the second cyclic redundancy check code $CRC(Command_1)_2$ should be the same as the aforementioned first cyclic redundancy check code $CRC(Command_1)_1$.

Assuming that the preset algorithm adopted by the first device and the second device is a lightweight cryptographic algorithm; then processing, by the first device, the second key and the first downlink service command based on the preset algorithm to obtain the first sequence may include: calculating, by the first device with the second key and the first downlink service command based on the lightweight cryptographic algorithm to obtain the first sequence. In this example, the calculation manner for obtaining the first sequence may be represented by the following formula: $s_T = MAC(K_2, Command_1)$; where $K_2$ represents the second key; $Command_1$ represents the first downlink service command.

It should be understood that this is merely an exemplary explanation and all possible processing of the preset algorithms is not exhaustive herein.

The downlink signal received by the first device is different from the downlink signal sent from the aforementioned second device. This is because the downlink signal received by the first device is also a downlink signal after channel transmission. In the present implementation, assuming that the first device may obtain the first downlink service command through error-free decoding, the first information carried in the downlink signal received by the first device is represented as: $y_T = [y_1, \cdots, y_L] = H_{RT}X + N_T$ ; where the specific explanation of respective parameters is the same as those in the aforementioned embodiments. If the channel between the first device and the second device satisfies reciprocity, $H_{RT} = H_{TR}$, that is, channel estimate matrices on the first device side and the second device side are the same. Based on the explanation of the aforementioned embodiments, it can be seen that X is obtained by $s_R$ dividing by the channel estimate value $\hat{H}$. Therefore, if the channel estimate value obtained on the second device side is approximately the same as $H_{TR}$, then $y_T = s_R + N_T$ may be finally obtained.

The processing that the first device authenticates the first information in the downlink signal that is received based on the first sequence to obtain the authentication result is the same as those in the aforementioned embodiments, which will not be repeated herein.

Optionally, after the second device sends the authentication request signaling to the first device, the aforementioned S310 may be directly performed, that is, the downlink signal is directly sent; correspondingly, the first device performs the aforementioned S210. Herein, the downlink signal is used to carry the first information and the first downlink service command; the first information may only contain the aforementioned second sequence. The generating manner of the second sequence that the second device generates the second sequence based on the first key and the first downlink service command. The specific explanation is the same as those in the aforementioned embodiments, which will not be repeated herein. In this case, the manner in which the first device generates the first sequence after receiving the downlink signal, and the processing of authenticating the first information carried in the downlink signal that is received based on the first sequence are the same as those in the aforementioned embodiments, except that in the present implementation, the aforementioned first information X is not calculated by using the channel estimate value, and correspondingly, when the first device side calculates based on the first sequence and the first information carried in the downlink signal that is received to obtain the first numerical value, the first numerical value may be different from the aforementioned value, and thus the adopted preset threshold range may be different, which is not specifically limited herein.

In the present implementation, the processing of the first device may further include: in a case where the authentication result is an authentication pass, performing, by the first device, the first downlink service command. In addition, the processing of the first device may further include: in a case where the authentication result is an authentication failure, ending, by the first device, the processing and waiting for the next authentication request signaling to be received for the next processing.

Furthermore, the processing of the first device may further include: in a case where the authentication result is an authentication pass, sending, by the first device, an uplink signal carrying first uplink service data. Correspondingly, the processing of the second device may further include: receiving, by the second device, an uplink signal carrying the first uplink service data sent from the first device. The specific explanation is the same as those of the aforementioned embodiments, which will not be repeated herein.

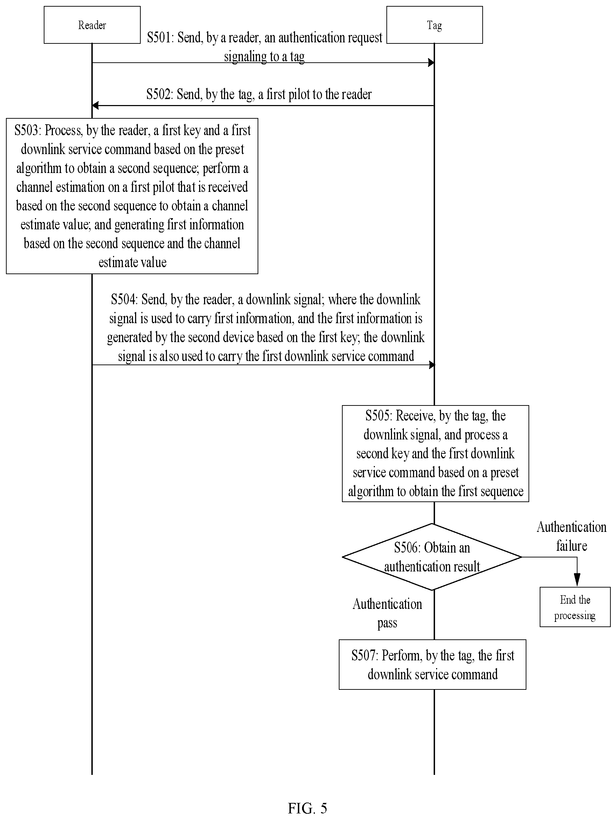

In conjunction with FIG. 5, taking the first device as a tag and the second device as a reader as an example, solutions provided by the present implementation are exemplarily explained as S501 to S507.

S501: sending, by a reader, an authentication request signaling to a tag.

The authentication request signaling is used to supply power to the tag and enables the tag to initiate the authentication process.

S502: sending, by the tag, a first pilot to the reader.

Herein, the explanation of the first pilot is the same as those in the aforementioned embodiments, which will not be repeated herein.

S503: processing, by the reader, a first key and a first downlink service command based on the preset algorithm to obtain a second sequence; performing channel estimation on the first pilot that is received based on the second sequence to obtain a channel estimate value; and generating first information based on the second sequence and the channel estimate value.

The specific explanation of the first pilot received by the reader is the same as those in the aforementioned embodiments, which will not be repeated herein. Herein, the explanations of the first key and the second key are the same as those of the aforementioned embodiments, which will not be repeated herein; the manner of generating the channel estimate value, the second sequence, and the first information is the same as those of the aforementioned embodiments, which will not be repeated herein.

S504: sending, by the reader, a downlink signal; where the downlink signal is used to carry first information, and the first information is generated by the second device based on the first key; the downlink signal is also used to carry the first downlink service command.

The channel estimate value is obtained by the reader performing channel estimation on the first pilot that is received based on the second sequence; the second sequence is generated by the reader based on the first key. The processing of the reader generating the second sequence may include: processing, by the reader, the first key and the first downlink service command based on the preset algorithm to obtain the second sequence. The specific processing manner has been described in the aforementioned embodiments, which will not be repeated herein.

S505: receiving, by the tag, a downlink signal, and processing a second key and the first downlink service command based on a preset algorithm to obtain the first sequence.

The manner for the tag generating the first sequence has been described in detail in the aforementioned embodiments, which will not be repeated herein.

S506: authenticating, by the tag, the first information carried in the downlink signal that is received based on the first sequence to obtain an authentication result; in a case where the authentication result is an authentication pass, S507 is performed; if the authentication result is an authentication failure, the processing is ended.

The processing manner of the authentication is the same as those in the aforementioned embodiments, which will not be repeated herein.

S507: performing, by the tag, the first downlink service command.

In yet another possible implementation, the downlink signal carrys not only the first information, but also a first downlink service command. Herein, the first downlink service command is obtained by the second device scrambling a second downlink service command based on a first scrambling code; and the first scrambling code is generated by the second device based on the first key.

Optionally, the second device receives the first pilot; after receiving the first pilot, the second device performs the aforementioned S310.

In the aforementioned S310, the sending, by the second device, the downlink signal may include: processing, by the second device, the first key based on a preset algorithm to obtain a second sequence; generating, by the second device, the first information based on the second sequence; and the sending, by the second device, the downlink signal carrying the first information. Herein, the generating, by the second device, the first information based on the second sequence includes: performing, by the second device, channel estimation on the first pilot that is received based on the second sequence to obtain a channel estimate value; generating, by the second device, the first information based on the second sequence and the channel estimate value.

The specific explanation of the first pilot received by the second device is the same as those in the aforementioned embodiments, which will not be repeated herein.

The difference from the aforementioned embodiments is that, in the present implementation, the second sequence is generated by the second device based on the first key and the second downlink service command. Specifically, the processing, by the second device, the first key based on the preset algorithm to obtain the second sequence includes: processing, by the second device based on the preset algorithm, the first key and the second downlink service command to obtain the second sequence.

Assuming that the preset algorithm is a random number algorithm, specifically implemented based on a pseudo-random number generator; then processing, by the second device based on the preset algorithm, the first key and the second downlink service command to obtain the second sequence may include: performing, by the second device, calculation to obtain a third cyclic redundancy check code based on the second downlink service command; calculating based on the random number algorithm with the first key and the third cyclic redundancy check code to obtain the second sequence. Herein, the third cyclic redundancy check code calculated by the second device based on the second downlink service command may be generated by using a preset cyclic redundancy encoder, and the preset cyclic redundancy encoder may be a cyclic redundancy encoder inherent in or specified in the EPC protocol, the specific processing manner of which is not limited in the present embodiment. The calculation manner for obtaining the second sequence may be represented by the following formula: $s_R = PRNG(K_1, CRC(Command_2)_3)$; where $K_1$ represents the first key; $Command_2$ represents the second downlink service command; $PRNG(\cdot)$ represents the random number algorithm used by the pseudo-random number generator, $CRC(\cdot)$ is the cyclic redundancy encoder inherent in the EPCTM protocol, $CRC(Command_2)_3$, that is, the third cyclic redundancy check code; $s_R$ represents the second sequence.

Assuming that the preset algorithm is a lightweight cryptographic algorithm; then the processing, by the second device based on the preset algorithm, the first key and the second downlink service command to obtain the second sequence, may include: calculating, by the second device with the first key and the second downlink service command based on the lightweight cryptographic algorithm to obtain the second sequence. In this example, the calculation manner for obtaining the second sequence may be represented by the following formula: $s_R = MAC(K_1, Command_2)$; where $K_1$ represents the first key; $Command_2$ represents the second downlink service command; $MAC(\cdot)$ represents a lightweight cryptographic algorithm; $s_R$ represents the second sequence.

It should be understood that this is merely an exemplary explanation and all possible processing of the preset algorithms is not exhaustive herein.

The second sequence obtained based on the processing of the present implementation may be represented in the same way as the aforementioned second sequence, that is: $s_R = diag(s_{R_1}, \cdots, s_{R_L})$, and the specific definitions of the parameters therein are not repeated herein.

The performing, by the second device, channel estimation on the first pilot that is received based on the second sequence to obtain a channel estimate value specifically may be, dividing, by the second device, the first pilot that is received by the aforementioned second sequence to obtain a channel estimate value. It should be noted that compared with the aforementioned processing manner of generating the second sequence only based on the first key, the channel estimate value obtained by the second device in the present implementation is different from those in the aforementioned embodiments due to the different manner of generating the second sequence. However, the specific processing manner for the second device to obtain the channel estimate value is the same as those in the aforementioned embodiments, so the specific processing manner thereof will not be repeated herein.

The generating, by the second device, the first information based on the second sequence and the channel estimate value may be that calculating, by the second device with the second sequence and the channel estimate value based on a first preset function to generate the first information. It should be noted that compared with the aforementioned processing manner of generating the second sequence only based on the first key, the first information obtained by the second device in the present implementation is different from those in the aforementioned embodiments due to the different manner of generating the second sequence. However, the specific processing manner for the second device to obtain the first information and the first preset function are the same as those in the aforementioned embodiments, which will not be repeated herein.

Before the second device sends the aforementioned downlink signal, the second device will also scramble the second downlink service command. The specific method further includes: generating, by the second device, a first scrambling code based on the first key; scrambling, by the second device, the second downlink service command based on the first scrambling code to obtain the first downlink service command.

Herein, the processing of the second device generating the first scrambling code based on the first key may be implemented based on a cryptographic algorithm. The cryptographic algorithm may specifically be a lightweight cryptographic algorithm, such as any one of the SPECK and SIMON algorithms, etc., and all possible cryptographic algorithms are not exhaustive herein. The processing of the second device generating the first scrambling code based on the first key may be represented by the following formula: $Scrambling_{RT-1} = MAC(K_1)$, where $MAC(\cdot)$ is a lightweight cryptographic algorithm, $K_1$ represents the first key, and $Scrambling_{RT-1}$ represents the first scrambling code.

The aforementioned scrambling manner may be a multiplicative manner. For example, the scrambling, by the second device, the second downlink service command based on the first scrambling code to obtain the first downlink service command may be that the first downlink service command may be obtained by multiplying the first scrambling code with the second downlink service command. It should be understood that this is only an exemplary explanation, and other scrambling manners may be used in actual processing, which are not exhaustive in the present embodiment.

It should also be noted that in the aforementioned embodiments, the same preset algorithm is used upon generating the first sequence, the third sequence, and the second sequence on the first device side and the second device side, and the preset algorithm may also be a lightweight cryptographic algorithm; the lightweight cryptographic algorithm used to generate the first scrambling code and the lightweight cryptographic algorithm used to generate the first sequence, the third sequence, and the second sequence may be the same or different, and may be set according to actual conditions, which are not limited in the present embodiment.

The second device may carry the first information through a first signal portion of a downlink signal, carry the first downlink service command through a second signal portion of the downlink signal, and send the downlink signal to the first device. Herein, the specific sending manner is the same as those in the aforementioned embodiments, which will not be repeated herein. After the first device receives the downlink signal, the aforementioned S220 may be performed, where the first device authenticates the first information carried in the downlink signal that is received based on the first sequence to obtain an authentication result.

In the present implementation, the first sequence is different from the aforementioned third sequence, and the manner in which the first device generates the first sequence may include: processing, by the first device, the second key and the third downlink service command based on a preset algorithm to obtain the first sequence.

Before the processing, by the first device, the second key and the third downlink service command based on the preset algorithm to obtain the first sequence may include: descrambling, by the first device, the first downlink service command carried by the downlink signal that is received based on a second scrambling code to obtain a third downlink service command; where the second scrambling code is generated based on the second key.

Herein, the manner for generating the second scrambling code may include: generating, by the first device, the second scrambling code based on the second key. The aforementioned processing of generating the second scrambling code may be achieved by the first device based on a cryptographic algorithm. The cryptographic algorithm used by the first device is the same as that of the aforementioned second device. The cryptographic algorithm may specifically be a lightweight cryptographic algorithm, such as any one of SPECK, SIMON algorithms, etc., and all possible cryptographic algorithms are not exhaustive herein. In a case where the second key and the first key of the first device and the second device are the same and the cryptographic algorithms used are the same, the second scrambling code and the first scrambling code should be the same. The processing of generating, by the first device, the second scrambling code based on the second key may be represented by the following formula: $Scrambling_{RT-2} = MAC(K_2)$, where $MAC(\cdot)$ is a lightweight cryptographic algorithm, $K_2$ represents the second key, and $Scrambling_{RT-2}$ represents the second scrambling code.

In a case where the aforementioned second scrambling code is the same as the first scrambling code, the aforementioned third downlink service command obtained by descrambling by the first device should be the same as the second downlink service command sent from the second device.

Assuming that the preset algorithm adopted by the first device and the second device is a random number algorithm, specifically implemented based on a pseudo-random number generator; then processing, by the first device, the second key and the third downlink service command based on the preset algorithm to obtain the first sequence may include: performing, by the first device, calculation to obtain a fourth cyclic redundancy check code based on the third downlink service command; calculating with the second key and the fourth cyclic redundancy check code to obtain the first sequence based on the random number algorithm. Herein, the fourth cyclic redundancy check code calculated by the first device based on the third downlink service command may be generated by using a preset cyclic redundancy encoder, and the preset cyclic redundancy encoder may be a cyclic redundancy encoder inherent in or specified in the EPC protocol, the specific processing manner of which is not limited in the present embodiment.

In this example, the calculation manner for obtaining the first sequence may be represented by the following formula: $s_T = PRNG(K_2, CRC(Command_3)_4)$ ; where $K_2$ represents the second key; $Command_3$ represents the third downlink service command; $PRNG(\cdot)$ represents the random number algorithm used by the pseudo-random number generator, $CRC(\cdot)$ is the cyclic redundancy encoder inherent in the EPCTM protocol; $s_T$ represents the first sequence. Herein, if the third downlink service command parsed by the first device is the same as the second downlink service command of the second device, the fourth cyclic redundancy check code $CRC(Command_3)_4$ should be the same as the aforementioned third cyclic redundancy check code $CRC(Command_2)_3$.

Exemplarily, assuming that the preset algorithm adopted by the first device and the second device is a lightweight cryptographic algorithm; then processing, by the first device, the second key and the third downlink service command based on the preset algorithm to obtain the first sequence may include: calculating, by the first device with the second key and the third downlink service command based on the lightweight cryptographic algorithm to obtain the first sequence. In this example, the calculation manner for obtaining the first sequence may be represented by the following formula: $s_T = MAC(K_2, Command_3)$; where $K_2$ represents the second key; $Command_3$ represents the third downlink service command.

It should be understood that this is merely an exemplary explanation and all possible processing of the preset algorithms is not exhaustive herein.

The downlink signal received by the first device is different from the downlink signal sent from the aforementioned second device. This is because the downlink signal received by the first device is also a downlink signal after channel transmission. In the present implementation, assuming that the first device may obtain the third downlink service command through error-free decoding, the first information of the downlink signal received by the first device is represented as: $y_T = [y_1, \cdots, y_L] = H_{RT}X + N_T$; where the specific explanation of respective parameters are the same as those in the aforementioned embodiments. If the channel between the first device and the second device satisfies reciprocity, $H_{RT} = H_{TR}$, that is, channel estimate matrices on the first device side and the second device side are the same. Based on the explanation of the aforementioned embodiments, it can be seen that X is obtained by $s_R$ dividing by the channel estimate value $\hat{H}$. Therefore, if the channel estimate value obtained on the second device side is approximately the same as $H_{TR}$, then $y_T = s_R + N_T$ may be finally obtained.

The processing that the first device authenticates the first information in the downlink signal that is received based on the first sequence to obtain the authentication result is the same as those in the aforementioned embodiments, which will not be repeated herein.

Optionally, after the second device sends the authentication request signaling to the first device, the aforementioned S310 may be directly performed, that is, the downlink signal is directly sent; correspondingly, the first device performs the aforementioned S210. Herein, the downlink signal is used to carry the first information and the first downlink service command; the first information may only contain the aforementioned second sequence. The first downlink service command is obtained by the second device scrambling a second downlink service command based on a first scrambling code; and the first scrambling code is generated by the second device based on the first key and specific explanation thereof is same as the aforementioned embodiments. Regarding the manner for generating the second sequence, the second sequence is generated by the second device based on the first key and the second downlink service command, and the specific explanation thereof is same as the aforementioned embodiments, which will not be repeated herein. In this case, the manner in which the first device generates the first sequence after receiving the downlink signal, and the processing of authenticating the first information carried in the downlink signal that is received based on the first sequence are the same as those in the aforementioned embodiments, except that in the present implementation, the aforementioned first information X is calculated without the channel estimate value, and correspondingly, when the first device side performs a calculation based on the first sequence and the first information carried in the downlink signal that is received to obtain the first numerical value, the first numerical value may be different from the aforementioned value, and thus the adopted preset threshold range may be different, which is not specifically limited herein.

In the present implementation, the processing of the first device may further include: in a case where the authentication result is an authentication pass, performing, by the first device, the third downlink service command. It should be understood that, if the aforementioned second key and first key are the same, and the first scrambling code and the second scrambling code are the same, then the third downlink service command should be the same as an original command sent from the second device (i.e., the second downlink service command).

Further, the processing of the first device may further include: in a case where the authentication result is an authentication failure, ending, by the first device, the processing and waiting for the next authentication request signaling to be received for the next processing. In addition, in a case where the authentication is passed, the first device may also send uplink service data to the second device, which specifically may include the following two manners.

Manner 1: in a case where the authentication result is an authentication pass, the first device sends an uplink signal carrying uplink service data. Specifically, in a case where the authentication result is an authentication pass, the first device performs the first downlink service command, and the first device judges whether there is uplink service data to be transmitted. If so, the first device sends an uplink signal carrying the uplink service data. Correspondingly, the processing of the second device may further include: receiving, by the second device, the uplink signal carrying the uplink service data sent from the first device.

The specific explanation is the same as those of the aforementioned embodiments, which will not be repeated herein.

Manner 2: the processing of the first device may further include: in a case where the authentication result is an authentication pass, scrambling, by the first device, the first uplink service data based on a third scrambling code to obtain second uplink service data; where the third scrambling code is generated based on a third key; sending, by the first device, an uplink signal carrying the second uplink service data. The processing of the second device may further include: receiving, by the second device, an uplink signal carrying second uplink service data sent from the first device; generating, by the second device, a fourth scrambling code based on a fourth key; descrambling, by the second device, the second uplink service data that is received based on the fourth scrambling code to obtain fourth uplink service data.

Herein, the third key and the fourth key need to be the same. However, the third key may be the same as or different from the aforementioned second key; the fourth key may be the same as or different from the aforementioned first key.

In the password-related policy pre-configured by the first device and the second device, in a case where the passwords of the first device and the second device are pre-configured to remain unchanged, the third key is the same as the second key, the fourth key is the same as the aforementioned first key, and the third key is the same as the fourth key.

In the password-related policy pre-configured by the first device and the second device, if it is pre-configured that a new password is used for each interaction between the first device and the second device, the third key is different from the second key, the fourth key is different from the aforementioned first key, and the third key is the same as the fourth key, and the second key is the same as the first key. Herein, the first device and the second device use a new password for each interaction, and then in each interaction, the first device and the second device may use a same password, but after completing this interaction, the first device and the second device update to obtain new passwords, respectively. This processing manner requires the first device and the second device to adopt a keystream; herein, the keystream may specifically include different keys generated by a keystream generator at different times.

Herein, the manner of generating the third scrambling code may include: generating, by the first device, the third scrambling code based on the third key. The aforementioned processing of generating the third scrambling code may be achieved by the first device based on a cryptographic algorithm. The cryptographic algorithm may specifically be a lightweight cryptographic algorithm, such as any one of the SPECK and SIMON algorithms, etc., and all possible cryptographic algorithms are not exhaustive herein. The processing of generating the third scrambling code by the first device based on the third key may be represented by the following formula: $Scrambling_{TR-3} = MAC(K_3)$, where $MAC(\cdot)$ is a lightweight cryptographic algorithm, $K_3$ represents the third key, and $Scrambling_{TR-3}$ represents the third scrambling code.

The generating, by the second device, the fourth scrambling code based on the fourth key, may be that obtaining the fourth scrambling code by processing the fourth key based on a cryptographic algorithm. Herein, the cryptographic algorithm used by the second device is the same as that of the aforementioned first device. The cryptographic algorithm may specifically be a lightweight cryptographic algorithm, such as any one of SPECK, SIMON algorithms, etc., and all possible cryptographic algorithms are not exhaustive herein. In a case where the third key and the fourth key of the first device and the second device are the same and the adpoted cryptographic algorithms are the same, the fourth scrambling code and the third scrambling code should be the same. The processing of generating, by the second device, the fourth scrambling code based on the fourth key may be represented by the following formula: $Scrambling_{TR-4} = MAC(K_4)$, where $MAC(\cdot)$ is a lightweight cryptographic algorithm, $K_4$ represents the fourth key, and $Scrambling_{TR-4}$ represents the fourth scrambling code.

In a case where the aforementioned fourth scrambling code is the same as the third scrambling code, when the second device descrambles the second uplink service data that is received based on the fourth scrambling code to obtain the fourth uplink service data, the fourth uplink service command should be the same as an original first uplink service command on the first device side.

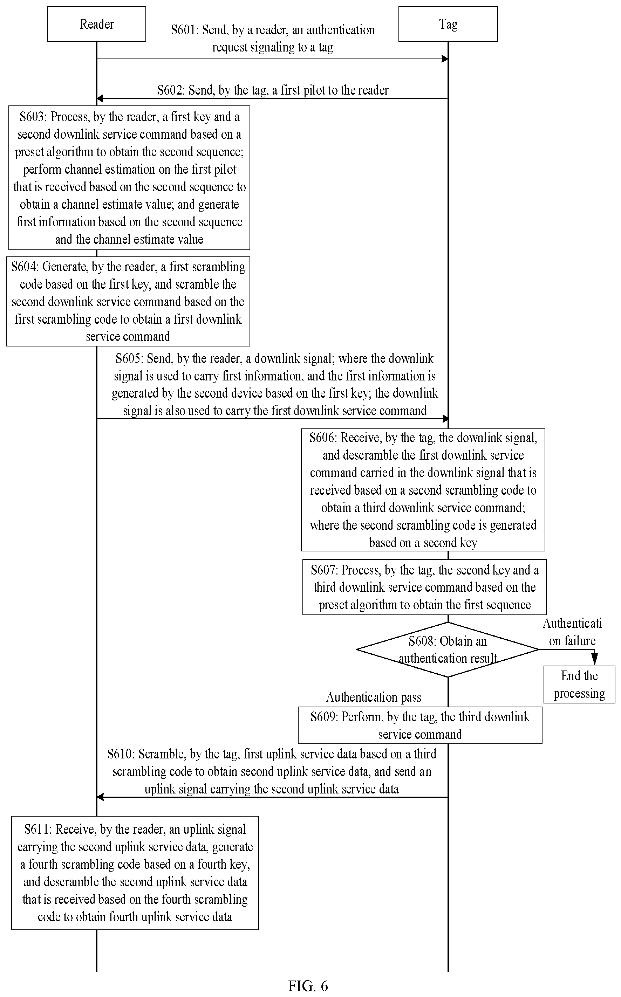

In conjunction with FIG. 6, taking the first device as a tag and the second device as a reader as an example, solutions provided by the present implementation are exemplarily explained as S601-S611:
S601: sending, by a reader, an authentication request signaling to a tag.

The authentication request signaling is used to supply power to the tag and enables the tag to initiate the authentication process.

S602: sending, by the tag, a first pilot to the reader.

Herein, the explanation of the first pilot is the same as those in the aforementioned embodiments, which will not be repeated herein.

S603: processing, by the reader, the first key and the second downlink service command based on a preset algorithm to obtain the second sequence; performing channel estimation on a first pilot that is received based on the second sequence to obtain a channel estimate value; and generating first information based on the second sequence and the channel estimate value.

Herein, the explanations of the first key and the second key are the same as those of the aforementioned embodiments, which will not be repeated herein; the manner of generating the channel estimate value, the second sequence, and the first information is the same as those of the aforementioned embodiments, which will not be repeated herein.

S604: generating, by the reader, a first scrambling code based on the first key, and scrambling second downlink service command based on the first scrambling code to obtain a first downlink service command.

The performing order of the aforementioned S603 and S604 may not be a particular order, and S603 and S604 may be performed simultaneously, or S603 may be performed first and then S604, or S604 may be performed first and then S603.

S605: sending, by the reader, a downlink signal;

where the downlink signal is used to carry first information, and the first information is generated by the second device based on the first key; the downlink signal is also used to carry the first downlink service command.

S606: receiving, by the tag, a downlink signal, and descrambling the first downlink service command carried in the downlink signal that is received based on a second scrambling code to obtain a third downlink service command; where the second scrambling code is generated based on a second key.

S607: processing, by the tag, the second key and the third downlink service command based on a preset algorithm to obtain the first sequence.

S608: authenticating, by the tag, the first information carried in the downlink signal that is received based on the first sequence to obtain an authentication result; in a case where the authentication result is an authentication pass, S609 is performed; if the authentication result is an authentication failure, the processing is ended.

The processing manner of the authentication is the same as those in the aforementioned embodiments, which will not be repeated herein.

S609: performing, by the tag, the third downlink service command.

In this step, the third downlink service command is the same as the original second downlink service command on the reader side.

S610: scrambling, by the tag, the first uplink service data based on a third scrambling code to obtain second uplink service data, and sending an uplink signal carrying the second uplink service data; where the third scrambling code is generated based on a third key.

S611: receiving, by the reader, an uplink signal carrying second uplink service data, generating a fourth scrambling code based on a fourth key, and descrambling the second uplink service data that is received based on the fourth scrambling code to obtain fourth uplink service data.

In this step, the fourth uplink service data obtained by the reader is the same as the original first uplink service data on the tag side.

In yet another possible implementation, the downlink signal carrys not only the first information, but also a first downlink service command. Herein, the first downlink service command is obtained by the second device scrambling the second downlink service command and a first random number based on the first scrambling code; the first scrambling code is generated by the second device based on the first key.

In this processing manner, the second downlink service command is the original downlink service command of the second device, and specific content thereof is not limited in the present embodiment; the aforementioned first downlink service command is obtained by scrambling the second downlink service command and the first random number.

Optionally, the second device receives the first pilot; after receiving the first pilot, the second device performs the aforementioned S310.

In the aforementioned S310, in the processing of sending, by the second device, the downlink signal, the specific explanation of the first pilot received by the second device is the same as those in the aforementioned embodiments, which will not be repeated herein. The second sequence is generated by the second device based on the first key and the second downlink service command. Specifically, the processing, by the second device, the first key based on the preset algorithm to obtain the second sequence includes: processing, by the second device based on the preset algorithm, the first key and the second downlink service command to obtain the second sequence. The specific processing of processing, by the second device, the first key and the second downlink service command based on the preset algorithm to obtain the second sequence, is the same as those of the aforementioned embodiments, which will not repeated herein. The performing, by the second device, channel estimation on the first pilot that is received based on the second sequence to obtain a channel estimate value specifically may be: dividing, by the second device, the first pilot that is received by the aforementioned second sequence to obtain a channel estimate value. It should be noted that compared with the aforementioned processing manner of generating the second sequence only based on the first key, the channel estimate value obtained by the second device in the present implementation is different from those in the aforementioned embodiments due to the different manner of generating the second sequence. However, the specific processing manner for the second device to obtain the channel estimate value is the same as those in the aforementioned embodiments, so the specific processing manner will not be repeated herein.

The generating, by the second device, the first information based on the second sequence and the channel estimate value may be that: calculating, by the second device with the second sequence and the channel estimate value based on a first preset function to generate the first information. It should be noted that compared with the aforementioned processing manner of generating the second sequence only based on the first key, the first information obtained by the second device in the present implementation is different from those in the aforementioned embodiments due to the different manner of generating the second sequence. However, the specific processing manner for the second device to obtain the first information and the first preset function are the same as those in the aforementioned embodiments, which will not be repeated herein.

Before the second device sends the aforementioned downlink signal, the method further includes: generating, by the second device, a first scrambling code based on the first key; scrambling, by the second device, a second downlink service command based on the first scrambling code to obtain the first downlink service command. Herein, the processing of generating, by the second device, the first scrambling code based on the first key is the same as those of the aforementioned embodiments, which will not be repeated herein.

The difference from the aforementioned embodiments is that, in the present implementation, the scrambling, by the second device, the second downlink service command based on the first scrambling code to obtain the first downlink service command includes: scrambling, by the second device, the second downlink service command and a first random number based on the first scrambling code to obtain the first downlink service command. Herein, the first random number may be represented as R1. The first random number may be generated by the second device. The generatiing manner may adopt a random number algorithm, the specific calculation manner of which is not limited in the present embodiment. The second device may carry the first information through a first signal portion of a downlink signal, carry the first downlink service command through a second signal portion of the downlink signal, and send the downlink signal to the first device. Herein, the specific sending manner is the same as those in the aforementioned embodiments, which will not be repeated herein. After receiving the downlink signal, the first device performs the aforementioned S220.

The first sequence is different from the aforementioned third sequence, and the manner in which the first device generates the first sequence may include: processing, by the first device, the second key and the third downlink service command based on a preset algorithm to obtain the first sequence. The specific processing manner of processing, by the first device, the second key and the third downlink service command based on a preset algorithm to obtain the first sequence is the same as those in the aforementioned embodiments, which will not be repeated herein.

Before the processing, by the first device, the second key and the third downlink service command based on the preset algorithm to obtain the first sequence may include: descrambling, by the first device, the first downlink service command carried by the downlink signal that is received based on a second scrambling code to obtain a third downlink service command; where the second scrambling code is generated based on the second key. The descrambling, by the first device, the first downlink service command carried by the downlink signal that is received based on the second scrambling code to obtain the third downlink service command, may include: descrambling, by the first device, the first downlink service command carried by the downlink signal that is received based on the second scrambling code to obtain the third downlink service command and a second random number.

Herein, the generating manner of the second scrambling code is same as those of the aforementioned embodiments. Herein, the second random number may be represented as R2. In a case where the aforementioned second scrambling code is the same as the first scrambling code, the aforementioned third downlink service command obtained by descrambling by the first device should be the same as the second downlink service command sent from the second device. Likewise, the second random number R2 should be the same as the aforementioned first random number R1.

The downlink signal received by the first device is different from the downlink signal sent from the aforementioned second device. This is because the downlink signal received by the first device is also a downlink signal after channel transmission. In the present implementation, assuming that the first device may obtain the third downlink service command and the second random number through error-free decoding, the first information of the downlink signal received by the first device is represented as: $y_T = [y_1,\cdots,y_L] = H_{RT}X + N_T$ ; where the specific explanation of respective parameters is the same as those in the aforementioned embodiments, and the first information finally obtained by the first device is represented as $y_T = s_R + N_T$. The specific explanation of the first device obtaining the first information is the same as those of the aforementioned embodiments, which will not be repeated herein.

The processing that the first device authenticates the first information in the downlink signal that is received based on the first sequence to obtain the authentication result is the same as those in the aforementioned embodiments, which will not be repeated herein.

Optionally, after the second device sends the authentication request signaling to the first device, the aforementioned S310 may be directly performed, that is, the downlink signal is directly sent; correspondingly, the first device performs the aforementioned S210. Herein, the downlink signal is used to carry the first information and the first downlink service command; the first information may only contain the aforementioned second sequence. The first downlink service command is obtained by scrambling, by the second device, the second downlink service command and the first random number based on the first scrambling code; and the first scrambling code is generated by the second device based on the first key and specific explanation thereof is same as those in the aforementioned embodiments. The manner for generating the second sequence is that the second sequence is generated by the second device based on the first key and the second downlink service command, and specific explanation thereof is same as those in the aforementioned embodiments, which will not be repeated herein. In this case, the manner in which the first device generates the first sequence after receiving the downlink signal, and the processing of authenticating the first information carried in the downlink signal that is received based on the first sequence are the same as those in the aforementioned embodiments, except that in the present implementation, the aforementioned first information X is calculated without the channel estimate value, and correspondingly, when the first device side performs calculation based on the first sequence and the first information carried in the downlink signal that is received to obtain the first numerical value, the first numerical value may be different from the aforementioned value, and thus the adopted preset threshold range may be different, which is not specifically limited herein.

In the present implementation, the processing of the first device may further include: in a case where the authentication result is an authentication pass, performing, by the first device, the third downlink service command. It should be understood that herein, if the aforementioned second key and first key are the same, and the first scrambling code and the second scrambling code are the same, then the third downlink service command should be the same as an original command sent from the second device, i.e., the second downlink service command. Therefore, the first device performs the third downlink service command, that is, the first device performs the second downlink service command.

Further, the processing of the first device may further include: in a case where the authentication result is an authentication failure, ending, by the first device, the processing and wait for the next authentication request signaling to be received for the next processing. In addition, in a case where the authentication is passed, the first device may also send uplink service data to the second device, which specifically may include the following two manners.

Manner 3: in a case where the authentication result is an authentication pass, the first device sends an uplink signal carrying uplink service data. Specifically, in a case where the authentication result is an authentication pass, the first device performs the first downlink service command, and the first device judges whether there is uplink service data to be transmitted. If so, the first device sends an uplink signal carrying the uplink service data. Correspondingly, the processing of the second device may further include: receiving, by the second device, the uplink signal carrying the uplink service data sent from the first device. The specific explanation is the same as those of the aforementioned embodiments, which will not be repeated herein.

Manner 4: the processing of the first device may further include: in a case where the authentication result is an authentication pass, scrambling, by the first device, the first uplink service data and the second random number based on a third scrambling code to obtain third uplink service data; where the third scrambling code is generated based on a third key; the second random number is used by the second device to authenticate the first device; sending, by the first device, an uplink signal carrying the third uplink service data.

The processing of the second device may further include: receiving, by the second device, an uplink signal carrying third uplink service data sent from the first device; generating, by the second device, a fourth scrambling code based on a fourth key; descrambling, by the second device, the third uplink service data that is received based on the fourth scrambling code to obtain fifth uplink service data and a second random number; authenticating, by the second device, the first device based on the second random number and the first random number to obtain an authentication result of the first device; and in a case where the authentication result of the first device is an authentication pass, saving, by the second device, the fifth uplink service data.

Herein, the processing of authenticating, by the second device, the first device based on the second random number and the first random number to obtain the authentication result of the first device, may specifically include: in a case where the second random number is consistent with the first random number, determining, by the second device, that the authentication result of the first device is an authentication pass. That is, the second device authenticates the first device, that is, determines the authentication result of the first device by judging whether the second random number is consistent with the first random number; if the second random number is consistent with the first random number, then the authentication result of the first device is determined to be an authentication pass, and further, the fifth uplink service data may be saved; if the second random number is inconsistent with the first random number, then the authentication result of the first device is determined to be an authentication failure, and at this time, the fifth uplink service data is refused to be received. Although the second random number and the fifth uplink service data will be parsed upon receiving the third uplink service data, if the authentication result of the first device is an authentication failure, the fifth uplink service data may be discarded.

Herein, the third key and the fourth key need to be the same. However, the third key may be the same as or different from the aforementioned second key; the fourth key may be the same as or different from the aforementioned first key.

In the password-related policy pre-configured by the first device and the second device, in a case where the passwords of the first device and the second device are pre-configured to remain unchanged, the third key is the same as the second key, the fourth key is the same as the aforementioned first key, and the third key is the same as the fourth key.

In the password-related policy pre-configured by the first device and the second device, if it is pre-configured that a new password is used for each interaction between the first device and the second device, the third key is different from the second key, the fourth key is different from the aforementioned first key, and the third key is the same as the fourth key, and the second key is the same as the first key. Herein, the first device and the second device use a new password for each interaction, and then, in each interaction, the first device and the second device may use a same password, but after completing this interaction, the first device and the second device update to obtain new passwords, respectively. This processing manner requires the first device and the second device to adopt a keystream; herein, the keystream may specifically include different keys generated by a keystream generator at different times.

Herein, the generating manner of the third scrambling code and the generating manner of the fourth scrambling code are the same as those in the aforementioned embodiments, which will not be repeated herein. The second device descrambles the third uplink service data that is received based on the fourth scrambling code to obtain fifth uplink service data and a second random number, and receives and saves the fifth uplink service command only when the second random number is the same as the aforementioned first random number. In a case where the aforementioned fourth scrambling code is the same as the third scrambling code, the fifth uplink service command should be the same as the original first uplink service command on the first device side.

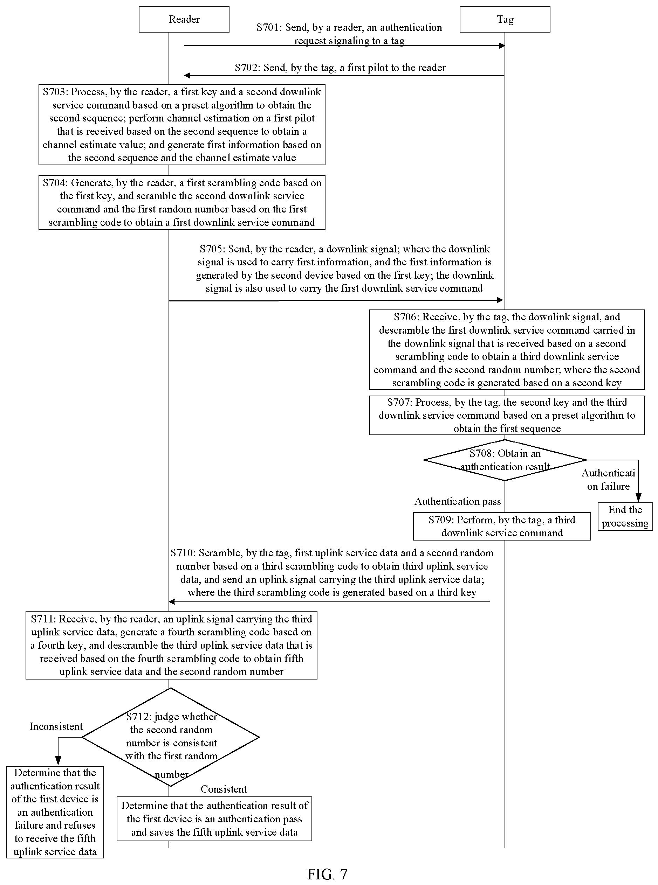

In conjunction with FIG. 7, taking the first device as a tag and the second device as a reader as an example, solutions provided by the present implementation are exemplarily explained as S701 to S712: S701: sending, by a reader, an authentication request signaling to a tag.

The authentication request signaling is used to supply power to the tag and enables the tag to initiate the authentication process.

S702: sending, by the tag, a first pilot to the reader.

Herein, the explanation of the first pilot is the same as those in the aforementioned embodiments, which will not be repeated herein.

S703: processing, by the reader, the first key and the second downlink service command based on a preset algorithm to obtain the second sequence; performing channel estimation on a first pilot that is received based on the second sequence to obtain a channel estimate value; and generating first information based on the second sequence and the channel estimate value.

Herein, the explanations of the first key and the second key are the same as those of the aforementioned embodiments, which will not be repeated herein; the manner of generating the channel estimate value, the second sequence, and the first information is the same as those of the aforementioned embodiments, which will not be repeated herein.

S704: generating, by the reader, a first scrambling code based on the first key, and scrambling the second downlink service command and the first random number based on the first scrambling code to obtain a first downlink service command.

The performing order of the aforementioned S703 and S704 may not be a particular order, and S703 and S704 may be performed simultaneously, or S703 may be performed first and then S704, or S704 may be performed first and then S703.

S705: sending, by the reader, a downlink signal;

where the downlink signal is used to carry first information, and the first information is generated by the second device based on the first key; the downlink signal is also used to carry the first downlink service command.

S706: receiving, by the tag, the downlink signal, and descrambling the first downlink service command carried in the downlink signal that is received based on a second scrambling code to obtain a third downlink service command and the second random number; where the second scrambling code is generated based on a second key.

S707: processing, by the tag, the second key and the third downlink service command based on a preset algorithm to obtain the first sequence.

S708: authenticating, by the tag, the first information carried in the downlink signal that is received based on the first sequence to obtain an authentication result; in a case where the authentication result is an authentication pass, S709 is performed; in a case where the authentication result is an authentication failure, the processing is ended.

The processing manner of the authentication is the same as those in the aforementioned embodiments, which will not be repeated herein.

S709: performing, by the tag, a third downlink service command.

In this step, the third downlink service command is the same as the original second downlink service command on the reader side.

S710: scrambling, by the tag, first uplink service data and a second random number based on a third scrambling code to obtain third uplink service data, and sending an uplink signal carrying the third uplink service data; where the third scrambling code is generated based on a third key.

S711: receiving, by the reader, an uplink signal carrying the third uplink service data, generating a fourth scrambling code based on a fourth key, and descrambling the third uplink service data that is received based on the fourth scrambling code to obtain fifth uplink service data and the second random number.

S712: judging, by the reader, whether the second random number is consistent with the first random number. If it is consistent, it is determined that the authentication result of the first device is an authentication pass and further, the fifth uplink service data is saved; if it is inconsistent, it is determined that the authentication result of the first device is an authentication failure and further, the fifth uplink service data is refused to be received.

In S712, the reader needs to authenticate the tag, that is, the reader determines the authentication result of the tag by judging whether the second random number is consistent with the first random number; if the second random number is consistent with the first random number, the authentication result of the tag is determined to be an authentication pass, and further, the fifth uplink service data may be saved; if the second random number is inconsistent with the first random number, the authentication result of the tag is determined to be an authentication failure, and at this time, the fifth uplink data is refused to be received. In this step, the fifth uplink service data obtained by the reader is the same as the original first uplink service data on the tag side.

Next, effective effects of the solutions provided by the aforementioned embodiments are analyzed.

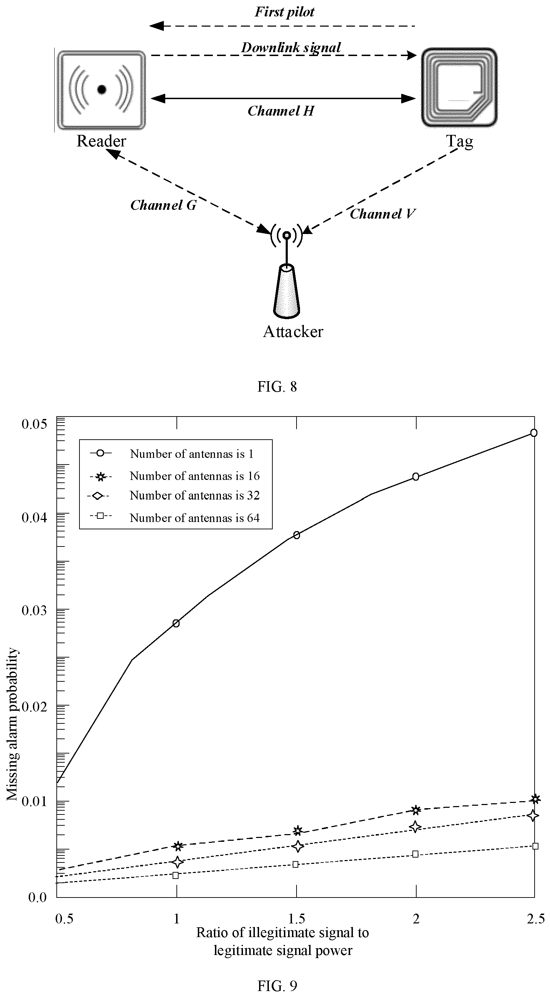

The two most critical signals transmitted in the air interface in the aforementioned embodiments are the first pilot and the downlink signal. Taking the first device as a reader and the second device as a tag as an example, refer to FIG. 8: due to the openness of the wireless air interface, an attacker may also receive the first pilot sent from the tag through the channel V and the downlink signal sent from the reader through the channel G ; assuming that the noise on the attacker side is $N_E$, the first pilot sent from the tag and received by the attacker may be represented as: $\boldsymbol{y_E} = \boldsymbol{Vs} + \boldsymbol{N_E}$; It can be seen from the above formula that the attacker may receive the first pilot masked by the channel V between the tag and the attacker, but since the attacker does not know the second key used to generate the first pilot at the original time, the attacker cannot estimate the channel V between the tag and the attacker, let alone acquiring the third sequence $\boldsymbol{s}$ carried by the first pilot. The downlink signal X intercepted by the attacker from the reader may be represented as: $\boldsymbol{y_E} = \boldsymbol{GX} + \boldsymbol{N_E}$; It can be seen from the above formula that the attacker may receive the downlink signal masked by the channel G between the reader and the attacker, but since the attacker may neither estimate the channel G between the reader and the attacker, nor know the legitimate channel estimate value $\hat{\boldsymbol{H}}$ and the first sequence $\boldsymbol{s_R}$ generated by the reader based on the second key, it is impossible to crack the first information of the downlink signal, and thus cannot obtain that the authentication result is the authentication pass. It can be seen that the solution provided by the present embodiment may ensure the security of air interface signals.

According to the sources of illegal downlink signals, there are three types of attacks: an attacker forging a downlink signal, an attacker tampering with a downlink signal, and an attacker replaying a downlink signal. The security analysis under these three attacks is as follows.

First, the attacker forging the downlink signal: when an attacker forges the downlink signal, the attacker first needs to forge a downlink service command, such as forging a write command, attempting to write incorrect data into the tag. Assuming the attacker forges a downlink service command forged by the attacker is *Command'*, since the attacker cannot acquire the second key of the aforementioned first device or the first key of the aforementioned second device, the forged second sequence of the attacker may be represented as:

$$s_E = PRNG\left(\boldsymbol{K}_E, CRC\left(Command'\right)\right)_{;}$$

Since the attacker cannot estimate the channel V between the tag and the attacker, the attacker may only combine the attack pilot $\boldsymbol{s_E}$ (as the first information) generated by the local side with the downlink forged service command and send it to the tag, that is, $s_E \parallel$ *Command'*. Assuming that the noise on the tag side is $\boldsymbol{N_T}$, the signal received by the tag from the attacker is represented as: $\boldsymbol{y_T} = \boldsymbol{Vs_E} + \boldsymbol{N_T}$; assuming that the tag decodes the downlink service command *Command'* forged by the attacker without error and calculates the local first sequence $\boldsymbol{s'_T}$, the first numerical value calculated by the tag is represented as:

$$t = \mathrm{R}\left(\boldsymbol{V s_E s'_T}^T + \boldsymbol{N_T s'_T}^T\right) \sim \mathrm{N}\left(0, \sigma_1^2\right)$$

. Since $\boldsymbol{s_E}$ is independent of $\boldsymbol{s'_T}$, the mean of the first numerical value t is 0. It can be seen from the above formula that an attacker forges a downlink signal, which does not pose an authentication threat to the tag.

Second, the attacker tampering with the downlink signal: different from the attacker forging the downlink signal, the attacker tampers with the downlink signal means that the attacker does not change the first information X in the original message format, but only tampers with the downlink service command, that is, $\boldsymbol{X} \parallel$ *Command'*, and forwards it to the label. Assuming that the tag decodes the downlink service command *Command'* tampered by the attacker without error and calculates the local first sequence $\boldsymbol{s'_T}$, the first numerical value calculated by the tag is represented as:

$$t = \mathrm{R}\left(\boldsymbol{GXs'_T}^T + \boldsymbol{N_E Vs'_T}^T + \boldsymbol{N_T s'_T}^T\right) \sim \mathrm{N}\left(0, \sigma_2^2\right)$$

.

Since X is not related to tampering with the downlink service command, X is not related to $\boldsymbol{s'_T}$, and the mean of its first numerical value is 0. It can be seen from the above formula that the attacker tampering with the downlink signal does not pose an authentication attack to the tag.

Third, the attacker replaying the downlink signal: the downlink signal sent from the reader and received by the attacker is masked by the channel $\boldsymbol{G}$. If the received signal is forwarded directly, the downlink signal will undergo channel $\boldsymbol{V}$ distortion again, and the error will become very large, which will not be an authentication attack to the tag.

Next, the impact of the attacker's forged downlink signal on the missed alarm probability is analyzed. Due to the hardware conditions of the tag, the tag is only configured with an antenna in the simulation. FIG. 9 shows the curve of the missed alarm probability of the system changing with the attacker's power when the attacker forges the downlink signal in a case where a number of antennas of the base station (i.e., the second device) is equipped with 1, 16, 32, and 64 antennas, respectively, where the horizontal axis in FIG. 9 is the ratio of the illegal signal power to the legitimate signal power. As it can be seen from FIG. 9, as the attacker's power increases, the variance of the test statistic of the forged signal will also increase, causing an increase of the missed alarm probability of the system. Base stations configured with different numbers of antennas all achieve a lower missed alarm probability. More intuitively, when the legitimate base station and the attacker antenna have only an antenna, the system missed alarm probability may be lower than 6%, which means that this solution may effectively identify the downlink signal forged by the attacker. In addition, as the number of legitimate base stations and attacker antennas increases, the missed alarm probability becomes lower and lower. This is because the increase in the number of antennas reduces the variance of the tag side test statistic, and the test statistic is more concentrated around the mean of 0, so the test result will be more accurate.

Secondly, the impact of the attacker replaying the downlink signal on the missed alarm probability: in a case where the number of antennas of the base station (i.e., the second device) is 1, 16, 32, and 64, respectively, the missed alarm probability of the system when the attacker replays the downlink signal is analyzed as the attacker's power changes. It can be seen that when the attacker's power increases, the variance of the test statistic of the replayed downlink signal will also increase, thereby causing the missed alarm probability of the system to increase accordingly. Base stations configured with different numbers of antennas all achieve a lower missed alarm probability, and the channels between the legitimate base station and the attacker, and between the attacker and the tag may mask the authentication identity. More intuitively, when the legitimate base station and the attacker's antenna have an antenna, the missed alarm probability of the system is as low as 0.15%, which means that this solution may effectively identify the downlink signal replayed by the attacker.

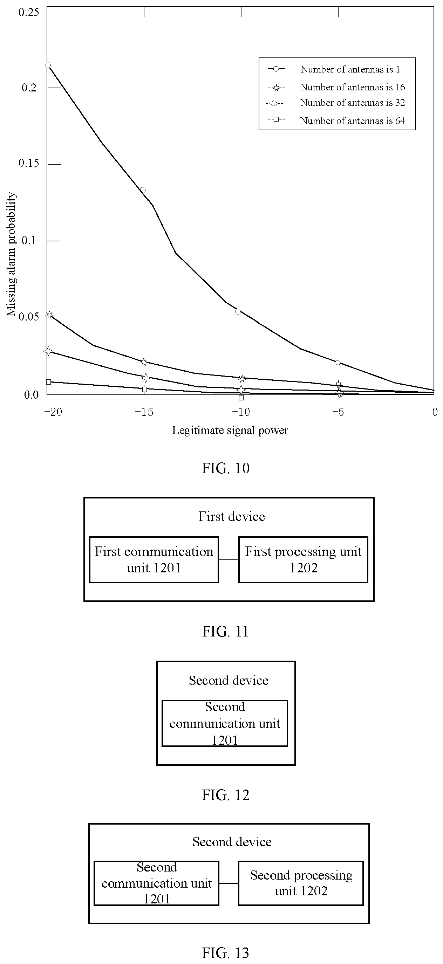

FIG. 10 shows the false alarm probability of this solution when the number of base station antennas is 1, 16, 32, and 64 antennas, respectively. It can be seen from FIG. 10 that the greater the legitimate signal power, the more accurate the channel value estimated by the reader side, so the false alarm probability of the system is lower. Therefore, this solution has good performance in terms of false alarm probability performance index, which shows that this solution is practical in typical environments. At the same time, as the number of legitimate base station antennas increases, the false alarm probability becomes lower and lower. In summary, whether it is the false alarm probability or the missed alarm probability, it has more obvious advantages for the base station to adopt multi-antenna technology.

The solutions provided by this embodiment use the private first pilot generated by the tag side and the downlink signal received by the tag side to perform hypothesis testing, and security thereof comes from the confidentiality of the pilot. Although the attacker may also receive the downlink signal sent from the legitimate base station, the downlink signal is masked by the channel between the base station and the attacker. Since the third sequence in the first pilot is generated with the second key, which is private, so the attacker cannot estimate the channel estimate value between the legitimate base station and the attacker. At the same time, since the channel is random, even if the attacker infinitely improves the computing power, it is impossible to crack the first information carried in the downlink signal received from the base station. Therefore, this solution may avoid computational attacks.

In the solution provided by the present embodiment, the first pilot may be regarded as a special usage of the inherent pilot symbol (preamble/frame synchronization sequence) in the zero-power consumption system, and does not occupy additional communication resources. At the same time, this solution integrates identity authentication and integrity protection, making communication more efficient.

The solution provided by the present embodiment places complex operations such as channel estimate and pilot processing on the base station side, and resource-limited tags only need to perform simple operations additionally such as a bit operation and a threshold judgment. The third sequence carried by the first pilot, a used pseudo-random number generator and a cyclic redundancy check are generated by a self-contained module in the RFID and do not need to be added additionally. In addition, the usage of private pilots prevents attackers from probing the channel, providing better security strength.

It can be seen that by adopting the solution provided by this embodiment, the first device authenticates the downlink signal carrying the first information based on the first sequence to obtain an authentication result; where the first information is generated by the second device based on the first key, and the first sequence is generated based on the second key. In this way, since a key is used for authentication processing, computational attacks may be avoided and security is guaranteed. Moreover, the authentication processing may be completed by only combining the information interaction of the original communication process, and no additional communication overhead is needed.

FIG. 11 is a structural schematic diagram of a component of a first device according to an embodiment of the present disclosure, including:

a first communication unit 1101, configured to receive a downlink signal; where the downlink signal is used to carry first information, the first information is generated by a second device based on a first key; a first processing unit 1102, configured to authenticate the first information carried in the downlink signal that is received based on a first sequence to obtain an authentication result; where the first sequence is generated based on a second key.

The first processing unit is configured to determine that the authentication result is an authentication pass in a case where a similarity between the first sequence and the first information carried in the downlink signal that is received satisfies a preset condition; and/or, determine that the authentication result is an authentication failure in a case where a similarity between the first sequence and the first information carried in the downlink signal that is received does not satisfy a preset condition.

The first processing unit is configured to calculate based on the first sequence and the first information carried in the downlink signal that is received to obtain a first numerical value; determine that the similarity between the first sequence and the first information in the downlink signal that is received satisfies a preset condition in a case where the first numerical value is within a preset threshold range.

The first information is generated by the second device based on the second sequence, and the second sequence is generated based on the first key.

The first processing unit is configured to process a second key based on a preset algorithm to obtain a third sequence;
the first communication unit is configured to send the first pilot carrying the third sequence.

The first information is generated by the second device based on a channel estimate value and the second sequence;
the channel estimate value is obtained by the second device performing channel estimation on a first pilot that is received based on the second sequence.

The first sequence is the same as the third sequence.

The downlink signal is further used to carry a first downlink service command.

The second sequence is generated by the second device based on the first key and the first downlink service command.

The first processing unit is configured to process the second key and the first downlink service command based on a preset algorithm to obtain the first sequence.

The first processing unit is configured to perform the first downlink service command in a case where the authentication result is an authentication pass.

The first downlink service command is obtained by the second device scrambling a second downlink service command based on a first scrambling code; and the first scrambling code is generated by the second device based on the first key.

The second sequence is generated by the second device based on the first key and the second downlink service command.

The first processing unit is configured to descramble the first downlink service command carried by the downlink signal that is received based on a second scrambling code to obtain a third downlink service command; where the second scrambling code is generated based on the second key.

The first processing unit is configured to process the second key and the third downlink service command based on a preset algorithm to obtain the first sequence.

The first processing unit is configured to perform the third downlink service command in a case where the authentication result is an authentication pass.

The first downlink service command is obtained by the second device scrambling the second downlink service command and a first random number based on the first scrambling code.

The first processing unit is configured to descramble the first downlink service command carried by the downlink signal that is received based on the second scrambling code to obtain the third downlink service command and the second random number.

The first communication unit is configured to send an uplink signal carrying first uplink service data in a case where the authentication result is an authentication pass.

The first processing unit is configured to scramble the first uplink service data based on a third scrambling code to obtain second uplink service data in a case where the authentication result is an authentication pass; where the third scrambling code is generated based on a third key;
the first communication unit is configured to send an uplink signal carrying the second uplink service data.

The first processing unit is configured to scramble the first uplink service data and the second random number based on the third scrambling code to obtain third uplink service data in a case where the authentication result is an authentication pass; where the third scrambling code is generated based on the third key; and the second random number is used for the second device to authenticate the first device; the first communication unit is configured to send an uplink signal carrying the third uplink service data.

The preset algorithm is one of: a random number algorithm, or a cryptographic algorithm.

The first device of the embodiments of the present disclosure can implement corresponding functions of the first device in the aforementioned authentication method embodiments. The procedures, functions, implementations and beneficial effects corresponding to respective modules (sub-modules, units or components, etc.) of the first device may refer to corresponding explanation in the above method embodiments, which will not be repeated herein. It should be noted that the functions described in respective modules (sub-modules, units or components, etc.) of the second device of the embodiments of the present disclosure may be implemented by different modules (sub-modules, units or components, etc.) or implemented by a same module (a sub-module, a unit or a component, etc.).

FIG. 12 is a structural schematic diagram of a component of a second device according to an embodiment of the present disclosure, including:

a second communication unit 1201, configured to send a downlink signal; where the downlink signal is used to carry first information, and the first information is generated by the second device based on a first key; the first information is used for a first device to perform authentication to obtain an authentication result.

Based on FIG. 12, as shown in FIG. 13, the second device further includes:

a second processing unit 1202, configured to process the first key based on a preset algorithm to obtain a second sequence; and generate first information based on the second sequence;

the second communication unit 1201, configured to send the downlink signal carrying the first information.

The second communication unit is configured to receive a first pilot sent from the first device; the first pilot is used to carry a third sequence; the third sequence is obtained by the first device processing a second key based on a preset algorithm.

A dimension of the channel estimate value is related to a number of antennas of the second device.

The downlink signal is further used to carry a first downlink service command.

The second processing unit is configured to process the first key and the first downlink service command based on the preset algorithm to obtain the second sequence.

The second processing unit is configured to generate a first scrambling code based on the first key; scramble a second downlink service command based on the first scrambling code to obtain the first downlink service command.

The second processing unit is configured to scramble the second downlink service command and a first random number based on the first scrambling code to obtain the first downlink service command.

The second processing unit is configured to process the first key and the second downlink service command based on the preset algorithm to obtain the second sequence.

The second communication unit is configured to receive an uplink signal carrying the first uplink service data sent from the first device.

The second processing unit is configured to generate a fourth scrambling code based on a fourth key; descramble the second uplink service data that is received based on the fourth scrambling code to obtain fourth uplink service data; and the second communication unit is configured to receive an uplink signal carrying the second uplink service data sent from the first device.

The second communication unit is configured to receive the uplink signal carrying the third uplink service data sent from the first device;

the second processing unit is configured to generate a fourth scrambling code based on a fourth key; descramble third uplink service data that is received based on the fourth scrambling code to obtain fifth uplink service data and a second random number; authenticate the first device based on the second random number and the first random number to obtain an authentication result of the first device; and save the fifth uplink service data in a case where the authentication result of the first device is an authentication pass.

The second processing unit is configured to determine that the authentication result of the first device is an authentication pass in a case where the second random number is consistent with the first random number.

The preset algorithm is one of: a random number algorithm, or a cryptographic algorithm.

The second device of the embodiments of the present disclosure can implement corresponding functions of the second device in the aforementioned authentication method embodiments. The procedures, functions, implementations and beneficial effects corresponding to respective modules (sub-modules, units or components, etc.) of the second device may refer to the corresponding description in the above method embodiments, which will not be repeated herein. It should be noted that the functions described in respective modules (sub-modules, units or components, etc.) of the second device of the embodiments of the present disclosure may be implemented by different modules (sub-modules, units or components, etc.) or implemented by a same module (a sub-module, a unit or a component, etc.).

Finally, the first device and the second device provided by this embodiment are described in detail.

The second device may be a reader, which may specifically be a user equipment (User Equipment, UE) or a network device. The first device may be a zero-power consumption terminal, or a zero-power consumption device, or a zero-power consumption Internet of Things terminal. The first device (a zero-power consumption terminal, or a zero-power consumption device, or a zero-power consumption Internet of Things terminal) may specifically be an electronic tag (or referred to a tag), may integrate a memory for data access, and/or integrate a sensor for sensor information collection. Since it is generally a large-scale application (for example, each asset or device will be attached with a tag), cost and power thereof consumption need to be taken into consideration.

The above first device and second device may constitute a zero-power consumption communication system. The outstanding technical advantage of the zero-power consumption communication is battery-free communication. By using key technologies such as radio frequency power harvesting, back scattering and low-power consumption computing, the terminal may be battery-free and support extremely low hardware complexity. Therefore, the zero-power consumption communication may satisfy the requirements of ultra-low power consumption, extremely small size and extremely low cost. It can be foreseen that the zero-power consumption technology will have significant application advantages in a wide range of application fields, e.g., applications in vertical industries such as industrial sensor networks, intelligent transportation, smart logistics, smart warehousing, smart agriculture, smart cities, and energy fields, as well as applications in scenarios such as smart wearables, smart homes, and medical care for individual consumers. In this section, we will select some typical scenarios to explain the application potential of zero-power consumption communications in these fields.

Depending on different application scenarios, the requirements for the aforementioned first device and second device may also be different. For example, in the application scenario of an industrial sensor network, the requirements for the first device and the second device may include:

In a case where the second device (i.e., the reader) is a network device, requirements (or characteristics) thereof being as follows: based on the basic settings of the cellular network and flexible deployment: for example, it may be deployed at outdoor pole stations and deployed at the distance between DIS (Digital Indoor System) stations indoors, and provide basic coverage; for another example, it may be deployed on demand to fill in blind spots or expand coverage; coverage requirements: the coverage distance requirement for a single station is greater than 30m indoors and greater than 100m outdoors; network security: based on authorized tag reading to protect privacy and data security; connection requirements: support sufficient system capacity to support data reading of a large number of terminals.

The characteristics of the first device (a zero-power consumption terminal, or a zero-power consumption device, or a zero-power consumption Internal of Things terminal) include but are not limited to the following: power consumption: may be less than 1mw, passive, battery-free and maintenance-free; working environment: needing to be able to match special environments, such as being able to work normally in special environments such as high temperature, high pressure, extreme cold, radiation, etc.; size: extremely small, convenient for large-scale application; communication distance: may reach a range of tens of meters to hundreds of meters; material type: may have paper labels and anti-metal labels.

It should be understood that the aforementioned only describes typical requirements for the first device and the second device based on the application scenario of the industrial sensor network, and the application scenario of the industrial sensor network may also contain other requirements, which are not exhaustive herein. In addition, in other application scenarios, the requirements for the first device and the second device may be different from the requirements of the aforementioned industrial sensor network. For example, in the application scenarios of smart logistics and smart warehousing, there may also be an increase in the need for connectivity (due to the large number of goods, a large number of tags need to be detected at the same time, so it may be necessary to achieve thousands of connections per second); for another example, in the application scenario of smart home, the demand for communication delay (smart home appliance adjustment: ten milliseconds to hundreds of milliseconds; home positioning: hundreds of milliseconds to seconds), as well as the demand for excitation signals (using the signals of smart devices in the home, such as smart phones, CPE (Customer Premise Equipment), and WIFI as energy excitation signals for passive terminals, without the need for additional excitation signals, simplifying the network layout), etc., may be increased, which are not exhaustive herein.

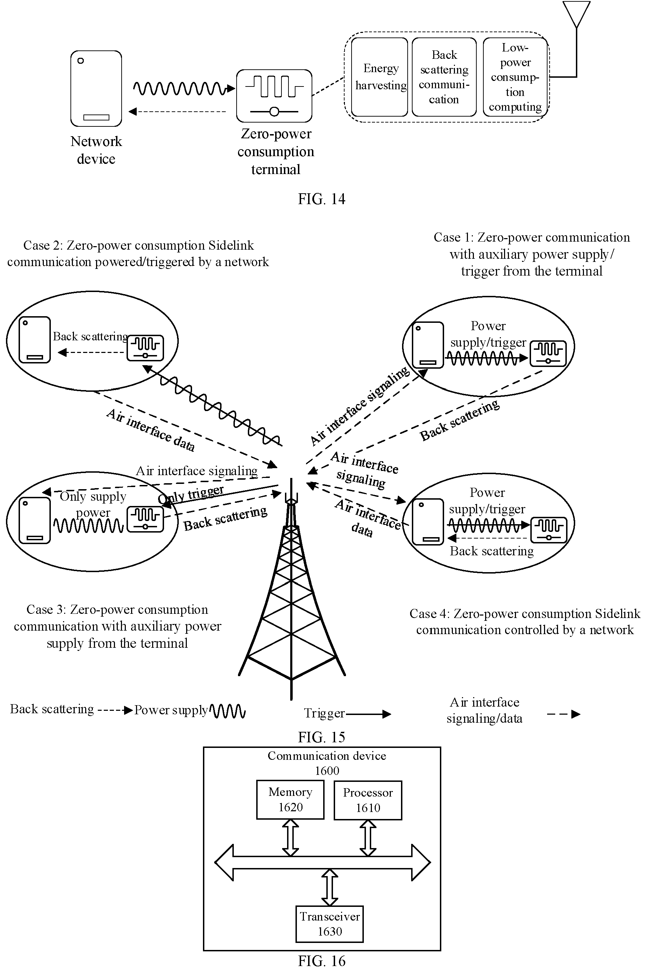

The aforementioned first device and second device may constitute a zero-power consumption communication system based on back scattering. In the back scattering-based zero-power consumption communication system, the first device (i.e., the zero-power consumption device) backscatters the received RF (Radio Frequency) signal modulated and reflected by transmitter, to transmit data instead of generating the RF signal itself. This technology has been widely used in practical production, such as RFID (Radio Frequency Identification), a tracking device, a remote switch, a medical telemetry and low-cost sensor network. The aforementioned first device and second device may constitute a zero-power consumption communication system based on back scattering, as shown in FIG. 14. The network device in FIG. 14 is the second device (such as a reader), and the zero-power consumption terminal is the first device.

As shown in FIG. 14, the zero-power consumption terminal (i.e., the first device) may include functions such as power harvesting, back scattering communication, and low-power consumption computing; where the power harvesting and back scattering communication may be implemented by the first communication unit of the aforementioned first device, and the low-power consumption computing may be implemented by the first processing unit of the aforementioned first device. The aforementioned power harvesting, back scattering communication, and low-power consumption computing are explained below:

First, power harvesting, that is, radio frequency power harvesting, has the basic principle of harvesting electromagnetic wave energy in space through electromagnetic induction. The essence of radio frequency power harvesting is to convert radio frequency energy into direct current voltage (RF-DC). Applied to zero-power consumption communication, the key requirement of radio frequency power harvesting is to effectively use the harvested energy to drive the load circuit (low-power consumption computing, sensors, etc.), and the radio frequency energy may achieve battery-free communication.

Second, back scattering (Back Scattering) was first proposed by Stockman in 1948 [4]. However, due to the following limitations, conventional back scattering communication cannot be widely used in data-intensive wireless communication systems: first, conventional back scattering communication requires the back scattering transmitter to be placed near its radio frequency source, which limits the usage and coverage area of the device. In addition, in conventional back scattering communications, a back scattering receiver and a radio frequency transmission source are located in a same device, that is, the reader (reader), which causes self-interference between the receiving and transmitting antennas, thereby reducing communication performance. Furthermore, a conventional back scattering communication system operates passively, i.e., a back scattering transmitter transmits data only when the back scattering transmitter is inquired by a back scattering receiver.

An ambient backscatter communication (Ambient Backscatter Communication, AmBC) has become a more promising technology to enable low-power consumption communication, which may effectively solve the above limitations in conventional back scattering communication systems, making the AmBC technology more widely adopted in practical applications.

An ambient backscatter communication system generally consists of three portions: an ambient radio-frequency (RF) source, a backscatter device (BD), and a reader (reader). The zero-power consumption device (i.e., the first device, such as a back scattering tag) receives a carrier signal sent from the reader (i.e., the second device), harvests energy through the RF power harvesting module (power harvesting is radio frequency power harvesting), and the harvested energy is used to supply power to the low-power consumption processing module (i.e., low-power consumption computing). After acquiring energy, the back scattering communication drives the corresponding circuit to modulate an incoming signal and perform back scattering.

Third, low-power consumption computing. The main characteristic of the zero-power consumption communication technology is to achieve back scattering communication by modulating the incoming signal. At the same time, the zero-power consumption communication technology may also obtain energy through power harvesting to drive a digital logic circuit or a chip (such as an MCU (Microcontroller Unit) or a sensor chip) to achieve signal encoding, encryption or simple calculation functions. The conversion efficiency of radio frequency energy is often less than 10%, which determines that the power requirements for driving the digital logic circuit or the chip for calculations cannot be too high. For example, 1 microjoule of energy may support the number of calculations. Although there have been improvements in technology and design optimization, the number of calculations per microjoule of energy may be used. Low-power consumption receiver, zero-power devices may be divided into two types based on functional requirements. One type has the main function of beacon-like broadcast transmission. In order to reduce structural complexity and power consumption, the receiver function may not be implemented. The other type considers the design of a simple and low-power consumption receiver. The ASK and FSK manners commonly used in the back scattering may be realized by simple circuit design. As for coding technology, non-return-to-zero and Manchester encoding are the two most commonly used encoding manners in the back scattering systems. In addition, there are simple and easy-to-implement coding manners such as unipolar return-to-zero (Unipolar RZ) encoding, differential bi-phase (DBP) encoding, Miller encoding, FM0 encoding, etc., which are also suitable for back scattering communication. By using simple encoding and modulation, the computing power consumption of the zero-power consumption communication may also be reduced to a great extent.

The following, in conjunction with FIG. 15, describes the different cases of the hybrid zero-power consumption communication system based on cellular and/or sidelink communication in details. Case 1, the zero-power consumption communication with auxiliary power supply/trigger from the intelligent terminal: The zero-power consumption terminal is powered and triggered by the intelligent terminal in the network, and the back scattering signal of the zero-power consumption terminal is received by the base station. Herein, the power supply, triggering for power supply and triggering operations of the intelligent terminal may be controlled by the base station through the air interface signaling. Case 2, the zero-power consumption sidelink communication powered/triggered by the network: the base station provides wireless power supply and sends trigger signaling to the zero-power consumption terminal. The back scattering signal of the zero-power consumption terminal is received by the intelligent terminal to complete the Sidelink communication. Furthermore, the intelligent terminal sends air interface data to the base station. Case 3, the zero-power consumption communication with auxiliary power supply from the intelligent terminal: the intelligent terminal in the network provides auxiliary power supply for the zero-power consumption terminals. The base station sends trigger information to the zero-power consumption terminals and receives the back scattering signals from the zero-power consumption terminals. The process of the intelligent terminal performing auxiliary power supply for a zero-power consumption terminal may be controlled by the base station through an air interface signaling. Case 4, the zero-power consumption sidelink communication controlled by the network: the intelligent terminal receives an air interface signaling and data from the network. The intelligent terminal supplies power and triggers the zero-power consumption terminal, and receives the back scattering signal from the zero-power consumption terminal to complete sidelink communication.

FIG. 16 is a schematic structural diagram of a communication device 1600 according to the embodiments of the present disclosure. The communication device 1600 includes a processor 1610, and the processor 1610 may invoke a computer program from a memory and execute the computer program to enable the communication device 1600 to implement the methods in the embodiments of the present disclosure.

In a possible implementation, the communication device 1600 further includes a memory 1620. Herein, the processor 1610 may invoke a computer program from the memory 1620 and execute the computer program to enable the communication device 1600 to implement the methods in the embodiments of the present disclosure. Herein, the memory 1620 may be a separate device independent from the processor 1610, or may also be integrated into the processor 1610.

In a possible implementation, the communication device 1600 may also include a transceiver 1630, and the processor 1610 may control the transceiver 1630 to communicate with other devices, and specifically, to send information or data to other devices, or receive information or data sent from other devices. Herein, the transceiver 1630 may include a transmitter and a receiver. The transceiver 1630 may further include antennas, and the number of antennas may be one or more.

In a possible implementation, the communication device 1600 may be the first device of the embodiments of the present disclosure, and the communication device 1600 may implement the corresponding procedure implemented by the first device in the various methods of the embodiments of the present disclosure, which will not be repeated herein for the sake of brevity.

In a possible implementation, the communication device 1600 may be the second device of the embodiments of the present disclosure, and the communication device 1600 may implement the corresponding procedure implemented by the second device in the various methods of the embodiments of the present disclosure, which will not be repeated herein for the sake of brevity.

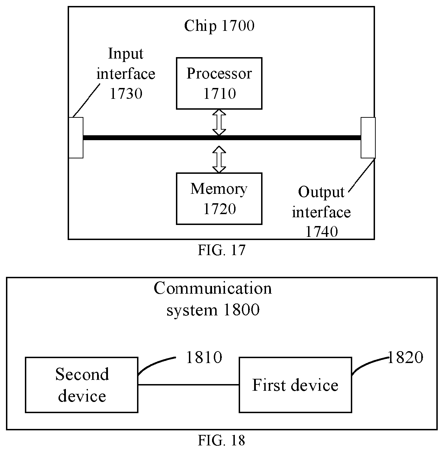

FIG. 17 is a schematic structural diagram of a chip 1700 according to the embodiments of the present disclosure. The chip 1700 includes a processor 1710, the processor 1710 may invoke a computer program from a memory and execute the computer program to implement the methods in the embodiments of the present disclosure.

In a possible implementation, the chip 1700 may further include a memory 1720. Herein, the processor 1710 may invoke a computer program from the memory 1720 and execute the computer program to implement the methods performed by the second device or the first device in the embodiments of the present disclosure. Herein, the memory 1720 may be a separate device independent from the processor 1710, or may also be integrated into the processor 1710.

In a possible implementation, the chip 1700 may further include an input interface 1730. Herein, the processor 1710 may control the input interface 1730 to communicate with other devices or chips, and specifically, the input interface 730 may acquire information or data sent from other devices or chips.

In a possible implementation, the chip 1700 may further include an output interface 1740. Herein, the processor 1710 may control the output interface 1740 to communicate with other devices or chips, and specifically, the output interface 740 may output information or data to other devices or chips.

In a possible implementation, the chip may be applied to the first device in the embodiments of the present disclosure, and the chip may implement the corresponding procedure implemented by the first device in the various methods of the embodiments of the present disclosure, which will not be repeated herein for the sake of brevity.

In a possible implementation, the chip may be applied to the second device in the embodiments of the present disclosure, and the chip may implement the corresponding procedure implemented by the second device in the various methods of the embodiments of the present disclosure, which will not be repeated herein for the sake of brevity.

The chips applied to the first device and the second device may be the same chip or different chips.

It should be noted that the chip mentioned in the embodiments of the present disclosure may be a system on chip, a system chip, a chip system or a system-on-chip chip, etc.

The above processor may be a general-purpose processor, a digital signal processor (digital signal processor, DSP), a field programmable gate array (field programmable gate array, FPGA), an application specific integrated circuit (application specific integrated circuit, ASIC) or other programmable logic devices, transistor logic device, a discrete hardware component, etc. Herein, a general-purpose processor mentioned above may be a microprocessor, or the processor may also be any conventional processor, etc.

The memory mentioned above may be a volatile memory or a non-volatile memory, or may include both volatile and non-volatile memories. Herein, the non-volatile memory may be a Read-Only Memory (read-only memory, ROM), a programmable read-only memory (Programmable ROM, PROM), an erasable programmable read-only memory (erasable PROM, EPROM), an electrically erasable programmable read-only memory (electrically EPROM, EEPROM) or a flash memory. The volatile memory may be a random access memory (random access memory, RAM).

It should be understood that the above memory is exemplary but not a limiting illustration, e.g., the memory in embodiments of the present disclosure may also be a static Random Access Memory (static RAM, SRAM), a Dynamic Random Access Memory (dynamic RAM, DRAM), a synchronous DRAM (synchronous DRAM, SDRAM), a double data rate SDRAM (double data rate SDRAM, DDR SDRAM), an enhanced SDRAM (enhanced SDRAM, ESDRAM), a synch link DRAM (synch link DRAM, SLDRAM), and a Direct Rambus RAM (Direct Rambus RAM, DR RAM), etc. That is, the memory in the embodiments of the present disclosure is intended to include, but not limited to, these and any other suitable types of memories.

FIG. 18 is a schematic block diagram of a communication system 1800 according to the embodiments of the present disclosure. The communication system 1800 includes a second device 1810 and a first device 1820. Herein, the second device 1810 may be configured to implement corresponding functions implemented by the second device in the above methods, and the first device 1820 may be configured to implement corresponding functions implemented by the first device in the above methods, which will not repeated herein for the sake of brevity.

In the above embodiments, all or part of the embodiments may be implemented by a software, a hardware, a firmware or any combination thereof. When implemented by using the software, all or part of the embodiments may be implemented in the form of a computer program product. The computer program product includes one or more computer instructions. When the computer program instructions are loaded and executed on a computer, the processes or functions in the embodiments of the present disclosure are generated in whole or in part. The computer may be a general purpose computer, a dedicated computer, a computer network, or other programmable apparatus. The computer instructions may be stored in a computer readable storage medium, or transmitted from a computer readable storage medium to another computer readable storage medium. For example, the computer instructions may be transmitted from a website, a computer, a server, or a data center to another website, another computer, another server, or another data center through wired (e.g., coaxial cable, optical fiber, digital subscriber line (Digital Subscriber Line, DSL)) or wireless (e.g., infrared, wireless, microwave, etc.) manners. The computer readable storage medium may be any available medium that the computer can access or a data storage device such as an integrated server, data center, etc., that contains one or more available media. The available medium may be a magnetic medium (e.g., a floppy disk, a hard disk, a magnetic tape), an optical medium (e.g., a DVD), or a semiconductor medium (e.g., a solid state disk (Solid State Disk, SSD)).

It should be understood that in the various embodiments of the present disclosure, the sizes of the serial numbers of the above processes do not mean the executing order. The executing order of each process should be determined by its function and internal logic, and should not constitute any limitation on the implementation process of the embodiments of the present disclosure.

It can be clearly understood by those skilled in the art that, for convenience and brevity of the description, the specific working procedures of the system, the apparatus and the unit described above may refer to the corresponding procedures in the above method embodiments, which will not be repeated herein.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be subject to the protection scope of the claims.

## Claims

1. An authentication method, comprising:

   receiving, by a first device, a downlink signal; wherein the downlink signal is used to carry first information, and the first information is generated by a second device based on a first key; and authenticating, by the first device based on a first sequence, the first information carried in the downlink signal that is received, so as to obtain an authentication result; wherein the first sequence is generated based on a second key.

2. The method according to claim 1, wherein the authenticating, by the first device based on the first sequence, the first information carried in the downlink signal that is received, so as to obtain the authentication result comprises:

   in a case where a similarity between the first sequence and the first information carried in the downlink signal that is received satisfies a preset condition, determining, by the first device that, the authentication result is an authentication pass; and/or,
   in a case where a similarity between the first sequence and the first information carried in the downlink signal that is received does not satisfy a preset condition, determining, by the first device that, the authentication result is an authentication failure.

3. The method according to claim 2, wherein the method further comprises:

   calculating, by the first device based on the first sequence and the first information carried in the downlink signal that is received, to obtain a first numerical value; and

in a case where the first numerical value is within a preset threshold range, determining that the similarity between the first sequence and the first information carried in the downlink signal that is received satisfies a preset condition.

4. The method according to any one of claims 1 to 3, wherein the first information is generated by the second device based on a second sequence, and the second sequence is generated based on the first key.

5. The method according to claim 4, wherein before the receiving, by the first device, the downlink signal, the method further comprises:

processing, by the first device, the second key based on a preset algorithm to obtain a third sequence; and
sending, by the first device, a first pilot carrying the third sequence.

6. The method according to claim 5, wherein the first information is generated by the second device based on a channel estimate value and the second sequence;

the channel estimate value is obtained by the second device performing channel estimation on the first pilot that is received based on the second sequence.

7. The method according to claim 5 or 6, wherein the first sequence is same as the third sequence.

8. The method according to any one of claims 4 to 6, wherein the downlink signal is further used to carry a first downlink service command.

9. The method according to claim 8, wherein the second sequence is generated by the second device based on the first key and the first downlink service command.

10. The method according to claim 9, wherein the method further comprises:
processing, by the first device, the second key and the first downlink service command based on a preset algorithm to obtain the first sequence.

11. The method according to any one of claims 8 to 10, wherein the method further comprises:
in a case where the authentication result is an authentication pass, performing, by the first device, the first downlink service command.

12. The method according to claim 8, wherein the first downlink service command is obtained by the second device scrambling a second downlink service command based on a first scrambling code; and the first scrambling code is generated by the second device based on the first key.

13. The method according to claim 12, wherein the second sequence is generated by the second device based on the first key and the second downlink service command.

14. The method according to claim 13, wherein the method further comprises:
descrambling, by the first device, the first downlink service command carried by the downlink signal that is received based on a second scrambling code to obtain a third downlink service command; wherein the second scrambling code is generated based on the second key.

15. The method according to claim 14, wherein the method further comprises:
processing, by the first device, the second key and the third downlink service command based on a preset algorithm to obtain the first sequence.

16. The method according to claim 15, wherein the method further comprises:
in a case where the authentication result is an authentication pass, performing, by the first device, the third downlink service command.

17. The method according to claim 16, wherein the first downlink service command is obtained by the second device scrambling the second downlink service command and a first random number based on the first scrambling code.

18. The method according to claim 17, wherein the descrambling, by the first device, the first downlink service command carried by the downlink signal that is received based on the second scrambling code to obtain the third downlink service command comprises:
descrambling, by the first device, the first downlink service command carried by the downlink signal that is received based on the second scrambling code to obtain the third downlink service command and a second random number.

19. The method according to any one of claims 1 to 18, wherein the method further comprises:
in a case where the authentication result is an authentication pass, sending, by the first device, an uplink signal carrying first uplink service data.

20. The method according to any one of claims 1 to 16, wherein the method further comprises:

in a case where the authentication result is an authentication pass, scrambling, by the first device, first uplink service data based on a third scrambling code to obtain second uplink service data; wherein the third scrambling code is generated based on a third key; and sending, by the first device, an uplink signal carrying the second uplink service data.

21. The method according to claim 18, wherein the method further comprises:

in a case where the authentication result is an authentication pass, scrambling, by the first device, first uplink service data and the second random number based on a third scrambling code to obtain third uplink service data; wherein the third scrambling code is generated based on a third key; and the second random number is used for the second device to authenticate the first device; and sending, by the first device, an uplink signal carrying the third uplink service data.

22. The method according to any one of claims 5, 10, and 15, wherein the preset algorithm is one of: a random number algorithm, or a cryptographic algorithm.

23. An authentication method, comprising:
sending, by a second device, a downlink signal; wherein the downlink signal is used to carry first information, and the first information is generated by the second device based on a first key; the first information is used for the first device to perform authentication to obtain an authentication result.

24. The method according to claim 23, wherein the sending, by the second device, the downlink signal comprises:

processing, by the second device based on a preset algorithm, the first key to obtain a second sequence; generating, by the second device, the first information based on the second sequence; and sending, by the second device, the downlink signal carrying the first information.

25. The method according to claim 24, wherein the method further comprises:
receiving, by the second device, a first pilot sent from the first device; wherein the first pilot is used to carry a third sequence; the third sequence is obtained by the first device processing a second key based on a preset algorithm.

26. The method according to claim 25, wherein the generating, by the second device, the first information based on the second sequence comprises:

performing, by the second device based on the second sequence, channel estimation on the first pilot that is received to obtain a channel estimate value; and generating, by the second device, the first information based on the second sequence and the channel estimate value.

27. The method according to claim 26, wherein a dimension of the channel estimate value is related to a number of antennas of the second device.

28. The method according to any one of claims 24 to 27, wherein the downlink signal is further used to carry a first downlink service command.

29. The method according to claim 28, wherein the processing, by the second device based on the preset algorithm, the first key to obtain the second sequence comprises:
processing, by the second device based on the preset algorithm, the first key and the first downlink service command to obtain the second sequence.

30. The method according to claim 28, wherein the method further comprises:

generating, by the second device, a first scrambling code based on the first key; and scrambling, by the second device, a second downlink service command based on the first scrambling code to obtain the first downlink service command.

31. The method according to claim 30, wherein the scrambling, by the second device, the second downlink service command based on the first scrambling code to obtain the first downlink service command comprises:
scrambling, by the second device, the second downlink service command and a first random number based on the first scrambling code to obtain the first downlink service command.

32. The method according to claim 30 or 31, wherein the processing, by the second device based on the preset algorithm, the first key to obtain the second sequence comprises:
processing, by the second device based on the preset algorithm, the first key and the second downlink service command to obtain the second sequence.

33. The method according to any one of claims 23 to 32, wherein the method further comprises:
receiving, by the second device, an uplink signal carrying first uplink service data sent from the first device.

**34.** The method according to any one of claims 23 to 30, wherein the method further comprises:

receiving, by the second device, an uplink signal carrying second uplink service data sent from the first device;
generating, by the second device, a fourth scrambling code based on a fourth key; and
descrambling, by the second device, the second uplink service data that is received based on the fourth scrambling code to obtain fourth uplink service data.

**35.** The method according to claim 31, wherein the method further comprises:

receiving, by the second device, an uplink signal carrying third uplink service data sent from the first device;
generating, by the second device, a fourth scrambling code based on a fourth key;
descrambling, by the second device, third uplink service data that is received based on the fourth scrambling code to obtain fifth uplink service data and a second random number.
authenticating, by the second device, the first device based on the second random number and the first random number to obtain the authentication result of the first device; and
in a case where the authentication result of the first device is an authentication pass, saving, by the second device, the fifth uplink service data.

**36.** The method according to claim 35, wherein the authenticating, by the second device, the first device based on the second random number and the first random number to obtain the authentication result of the first device comprises:
in a case where the second random number is consistent with the first random number, determining, by the second device, that the authentication result of the first device is the authentication pass.

**37.** The method according to any one of claims 24, 25, 29 and 32, wherein the preset algorithm is one of: a random number algorithm, or a cryptographic algorithm.

**38.** A first device, comprising:

a first communication unit, configured to receive a downlink signal; wherein the downlink signal is used to carry first information, and the first information is generated by a second device based on a first key; and
a first processing unit, configured to authenticate, based on a first sequence, the first information carried in the downlink signal that is received, so as to obtain an authentication result; wherein the first sequence is generated based on a second key.

**39.** The first device according to claim 38, wherein the first processing unit is configured to:

determine that the authentication result is an authentication pass in a case where a similarity between the first sequence and the first information carried in the downlink signal that is received satisfies a preset condition; and/or,
determine that the authentication result is an authentication failure in a case where a similarity between the first sequence and the first information carried in the downlink signal that is received does not satisfy a preset condition.

**40.** The first device according to claim 39, wherein the first processing unit is configured to calculate based on the first sequence and the first information carried in the downlink signal that is received to obtain a first numerical value; determine that the similarity between the first sequence and the first information in the downlink signal that is received satisfies a preset condition in a case where the first numerical value is within a preset threshold range.

**41.** The first device according to any one of claims 38 to 40, wherein the first information is generated by the second device based on a second sequence, and the second sequence is generated based on the first key.

**42.** The first device according to claim 41, wherein the first processing unit is configured to process the second key based on a preset algorithm to obtain a third sequence; and
the first communication unit is configured to send a first pilot carrying the third sequence.

**43.** The first device according to claim 42, wherein the first information is generated by the second device based on a channel estimate value and the second sequence;
the channel estimate value is obtained by the second device performing channel estimation on the first pilot that is received based on the second sequence.

**44.** The first device according to claim 42 or 43, wherein the first sequence is same as the third sequence.

**45.** The first device according to any one of claims **41** to 43, wherein the downlink signal is further used to carry a first downlink service command.

**46.** The first device according to claim 45, wherein the second sequence is generated by the second device based on the first key and the first downlink service command.

47. The first device according to claim 46, wherein the first processing unit is configured to process the second key and the first downlink service command based on a preset algorithm to obtain the first sequence.

48. The first device according to any one of claims 45 to 47, wherein the first processing unit is configured to perform the first downlink service command in a case where the authentication result is an authentication pass.

49. The first device according to claim 45, wherein the first downlink service command is obtained by the second device scrambling a second downlink service command based on a first scrambling code; and the first scrambling code is generated by the second device based on the first key.

50. The first device according to claim 49, wherein the second sequence is generated by the second device based on the first key and the second downlink service command.

51. The first device according to claim 50, wherein the first processing unit is configured to descramble the first downlink service command carried by the downlink signal that is received based on a second scrambling code to obtain a third downlink service command; wherein the second scrambling code is generated based on the second key.

52. The first device according to claim 51, wherein the first processing unit is configured to process the second key and the third downlink service command based on a preset algorithm to obtain the first sequence.

53. The first device according to claim 52, wherein the first processing unit is configured to perform the third downlink service command in a case where the authentication result is an authentication pass.

54. The first device according to claim 53, wherein the first downlink service command is obtained by the second device scrambling the second downlink service command and a first random number based on the first scrambling code.

55. The first device according to claim 54, wherein the first processing unit is configured to descramble the first downlink service command carried by the downlink signal that is received based on the second scrambling code to obtain the third downlink service command and a second random number.

56. The first device according to any one of claims 38 to 55, wherein the first communication unit is configured to send an uplink signal carrying first uplink service data in a case where the authentication result is an authentication pass.

57. The first device according to any one of claims 38 to 53, wherein the first processing unit is configured to scramble first uplink service data based on a third scrambling code to obtain second uplink service data in a case where the authentication result is an authentication pass; wherein the third scrambling code is generated based on a third key; the first communication unit is configured to send an uplink signal carrying the second uplink service data.

58. The first device according to claim 55, wherein the first processing unit is configured to scramble first uplink service data and the second random number based on a third scrambling code to obtain third uplink service data in a case where the authentication result is an authentication pass; wherein the third scrambling code is generated based on a third key; and the second random number is used for the second device to authenticate the first device; the first communication unit is configured to send an uplink signal carrying the third uplink service data.

59. The first device according to any one of claims 42, 47, and 52, wherein the preset algorithm is one of: a random number algorithm, or a cryptographic algorithm.

60. A second device, comprising:
a second communication unit, configured to send a downlink signal; wherein the downlink signal is used to carry first information, and the first information is generated by the second device based on a first key; the first information is used for a first device to perform authentication to obtain an authentication result.

61. The second device according to claim 60, wherein the second device further comprises:

a second processing unit, configured to process the first key based on a preset algorithm to obtain a second sequence; and generate first information based on the second sequence; the second communication unit is configured to send the downlink signal carrying the first information.

62. The second device according to claim 61, wherein the second communication unit is configured to receive a first pilot sent from the first device; the first pilot is used to carry a third sequence; the third sequence is obtained by the first device processing a second key based on a preset algorithm.

63. The second device according to claim 62, wherein the second device further comprises:
a second processing unit, configured to perform channel estimation on the first pilot that is received based on the second sequence to obtain a channel estimate value; and generate first information based on the second sequence and the channel estimate value.

64. The second device according to claim 63, wherein a dimension of the channel estimate value is related to a number of antennas of the second device.

65. The second device according to any one of claims 61 to 64, wherein the downlink signal is further used to carry a first downlink service command.

66. The second device according to claim 65, wherein the second processing unit is configured to process the first key and the first downlink service command based on the preset algorithm to obtain the second sequence.

67. The second device according to claim 65, wherein the second processing unit is configured to generate a first scrambling code based on the first key; scramble a second downlink service command based on the first scrambling code to obtain the first downlink service command.

68. The second device according to claim 67, wherein the second processing unit is configured to scramble the second downlink service command and a first random number based on the first scrambling code to obtain the first downlink service command.

69. The second device according to claim 67 or 68, wherein the second processing unit is configured to process the first key and the second downlink service command based on the preset algorithm to obtain the second sequence.

70. The second device according to any one of claims 60 to 69, wherein the second communication unit is configured to receive an uplink signal carrying first uplink service data sent from the first device.

71. The second device according to any one of claims 60 to 67, wherein the second device further comprises:

a second processing unit, configured to generate a fourth scrambling code based on a fourth key; and descramble second uplink service data that is received based on the fourth scrambling code to obtain fourth uplink service data;
the second communication unit is configured to receive an uplink signal carrying the second uplink service data sent from the first device.

72. The second device according to claim 68, wherein the second communication unit is configured to receive an uplink signal carrying third uplink service data sent from the first device;
the second processing unit is configured to generate a fourth scrambling code based on a fourth key; descramble third uplink service data that is received based on the fourth scrambling code to obtain fifth uplink service data and a second random number; authenticate the first device based on the second random number and the first random number to obtain an authentication result of the first device; and save the fifth uplink service data in a case where the authentication result of the first device is an authentication pass.

73. The second device according to claim 72, wherein the second processing unit is configured to determine that the authentication result of the first device is an authentication pass in a case where the second random number is consistent with the first random number.

74. The second device according to any one of claims 61, 62, 66, and 69, wherein the preset algorithm is one of: a random number algorithm, or a cryptographic algorithm.

75. A first device, comprising: a processor and a memory, wherein the memory is configured to store a computer program, the processor is configured to invoke and execute the computer program stored in the memory, so as to enable the first device to perform the method according to any one of claims 1 to 22.

76. A second device, comprising: a processor and a memory, wherein the memory is configured to store a computer program, the processor is configured to invoke and execute the computer program stored in the memory, so as to enable the second device to perform the method according to any one of claims 23 to 37.

77. A chip, comprising: a processor, configured to invoke a computer program from a memory and execute the computer program, so as to enable a device equipped with the chip to perform the method according to any one of claims 1 to 22.

78. A chip, comprising: a processor, configured to invoke a computer program from a memory and execute the computer program, so as to enable a device equipped with the chip to perform the method according to any one of claims 23 to 37.

**79.** A computer readable storage medium, wherein the computer readable storage medium is configured to store a computer program and the computer program, upon being executed by a device, enables the device to perform the method according to any one of claims 1 to 37.

**80.** A computer program product, comprising computer program instructions, wherein the computer program instructions enable a computer to perform the method according to any one of claims 1 to 37.

**81.** A computer program, wherein the computer program enables a computer to perform the method according to any one of claims 1 to 37.

FIG. 1

| Receive, by a first device, a downlink signal; where the downlink signal is used to carry first information, and the first information is generated by a second device based on a first key | S210 |

| Authenticate, by the first device, the first information carried in the downlink signal is received based on a first sequence to obtain an authentication result; where the first sequence is generated based on a second key | S220 |

FIG. 2

| Send, by a second device, a downlink signal; where the downlink signal is used to carry first information, and the first information is generated by the second device based on a first key; the first information is used for the first device to perform authentication to obtain an authentication result | S310 |

FIG. 3

FIG. 4

| Reader | | Tag |
|---|---|---|

S501: Send, by a reader, an authentication request signaling to a tag

S502: Send, by the tag, a first pilot to the reader

S503: Process, by the reader, a first key and a first downlink service command based on the preset algorithm to obtain a second sequence; perform a channel estimation on a first pilot that is received based on the second sequence to obtain a channel estimate value; and generating first information based on the second sequence and the channel estimate value

S504: Send, by the reader, a downlink signal; where the downlink signal is used to carry first information, and the first information is generated by the second device based on the first key; the downlink signal is also used to carry the first downlink service command

S505: Receive, by the tag, the downlink signal, and process a second key and the first downlink service command based on a preset algorithm to obtain the first sequence

S506: Obtain an authentication result

Authentication failure

End the processing

Authentication pass

S507: Perform, by the tag, the first downlink service command

FIG. 5

| Reader | | Tag |
|---|---|---|

S601: Send, by a reader, an authentication request signaling to a tag

S602: Send, by the tag, a first pilot to the reader

S603: Process, by the reader, a first key and a second downlink service command based on a preset algorithm to obtain the second sequence; perform channel estimation on the first pilot that is received based on the second sequence to obtain a channel estimate value; and generate first information based on the second sequence and the channel estimate value

S604: Generate, by the reader, a first scrambling code based on the first key, and scramble the second downlink service command based on the first scrambling code to obtain a first downlink service command

S605: Send, by the reader, a downlink signal; where the downlink signal is used to carry first information, and the first information is generated by the second device based on the first key; the downlink signal is also used to carry the first downlink service command

S606: Receive, by the tag, the downlink signal, and descramble the first downlink service command carried in the downlink signal that is received based on a second scrambling code to obtain a third downlink service command; where the second scrambling code is generated based on a second key

S607: Process, by the tag, the second key and a third downlink service command based on the preset algorithm to obtain the first sequence

S608: Obtain an authentication result

Authentication failure

End the processing

Authentication pass

S609: Perform, by the tag, the third downlink service command

S610: Scramble, by the tag, first uplink service data based on a third scrambling code to obtain second uplink service data, and send an uplink signal carrying the second uplink service data

S611: Receive, by the reader, an uplink signal carrying the second uplink service data, generate a fourth scrambling code based on a fourth key, and descramble the second uplink service data that is received based on the fourth scrambling code to obtain fourth uplink service data

FIG. 6

| Reader | | Tag |
|---|---|---|

S701: Send, by a reader, an authentication request signaling to a tag

S702: Send, by the tag, a first pilot to the reader

S703: Process, by the reader, a first key and a second downlink service command based on a preset algorithm to obtain the second sequence; perform channel estimation on a first pilot that is received based on the second sequence to obtain a channel estimate value; and generate first information based on the second sequence and the channel estimate value

S704: Generate, by the reader, a first scrambling code based on the first key, and scramble the second downlink service command and the first random number based on the first scrambling code to obtain a first downlink service command

S705: Send, by the reader, a downlink signal; where the downlink signal is used to carry first information, and the first information is generated by the second device based on the first key; the downlink signal is also used to carry the first downlink service command

S706: Receive, by the tag, the downlink signal, and descramble the first downlink service command carried in the downlink signal that is received based on a second scrambling code to obtain a third downlink service command and the second random number; where the second scrambling code is generated based on a second key

S707: Process, by the tag, the second key and the third downlink service command based on a preset algorithm to obtain the first sequence

S708: Obtain an authentication result

Authentication pass

Authentication failure

End the processing

S709: Perform, by the tag, a third downlink service command

S710: Scramble, by the tag, first uplink service data and a second random number based on a third scrambling code to obtain third uplink service data, and send an uplink signal carrying the third uplink service data; where the third scrambling code is generated based on a third key

S711: Receive, by the reader, an uplink signal carrying the third uplink service data, generate a fourth scrambling code based on a fourth key, and descramble the third uplink service data that is received based on the fourth scrambling code to obtain fifth uplink service data and the second random number

S712: judge whether the second random number is consistent with the first random number

Inconsistent

Determine that the authentication result of the first device is an authentication failure and refuses to receive the fifth uplink service data

Consistent

Determine that the authentication result of the first device is an authentication pass and saves the fifth uplink service data

FIG. 7

*First pilot*

*Downlink signal*

*Channel H*

Reader

Tag

*Channel G*

*Channel V*

Attacker

FIG. 8

FIG. 9

FIG. 10

FIG. 11

FIG. 12

FIG. 13

Network
device

Zero-power
consumption
terminal

Energy
harvesting

Back
scattering
communi-
cation

Low-
power
consump-
tion
computing

FIG. 14

Case 2: Zero-power consumption Sidelink
communication powered/triggered by a network

Case 1: Zero-power communication
with auxiliary power supply/
trigger from the terminal

Back scattering

Power
supply/trigger

Air interface data

Air interface signaling

Back scattering

Air interface signaling

Air interface
signaling

Only supply
power

Only trigger

Back scattering

Power
supply/trigger

Air interface
data

Back scattering

Case 3: Zero-power consumption
communication with auxiliary power
supply from the terminal

Case 4: Zero-power consumption Sidelink
communication controlled by a network

Back scattering ----▶ Power supply ⋀⋀⋀ Trigger ────▶ Air interface
signaling/data — —▶

FIG. 15

Communication device
1600

Memory
1620

Processor
1610

Transceiver
1630

FIG. 16

Chip 1700

Input
interface
1730

Processor
1710

Memory
1720

Output
interface
1740

FIG. 17

Communication
system 1800

Second
device

1810

First device

1820

FIG. 18

## INTERNATIONAL SEARCH REPORT

| International application No. |
|---|
| **PCT/CN2022/109094** |

**A. CLASSIFICATION OF SUBJECT MATTER**

H04W 12/06(2021.01)i; H04L 9/00(2022.01)i

According to International Patent Classification (IPC) or to both national classification and IPC

**B. FIELDS SEARCHED**

Minimum documentation searched (classification system followed by classification symbols)

H04W,H04L

Documentation searched other than minimum documentation to the extent that such documents are included in the fields searched

Electronic data base consulted during the international search (name of data base and, where practicable, search terms used)

CNTXT, ENTXT, CJFD: 鉴权, 认证, 验证, 导频, 密钥, 序列, 比较, 信道估计, identify, authentication, pilot, private, key, sequence, estimation, compare

**C. DOCUMENTS CONSIDERED TO BE RELEVANT**

| Category* | Citation of document, with indication, where appropriate, of the relevant passages | Relevant to claim No. |
|---|---|---|
| X | CN 109819444 A (HANGZHOU DIANZI UNIVERSITY) 28 May 2019 (2019-05-28) see description, paragraphs 0006-0089 | 1-81 |
| X | CN 109274493 A (INFORMATION ENGINEERING UNIVERSITY OF PLA) 25 January 2019 (2019-01-25) see description, paragraphs 0002-0079 | 1-81 |
| A | CN 108199991 A (SHENZHEN UNIVERSITY) 22 June 2018 (2018-06-22) see entire document | 1-81 |
| A | US 2010150348 A1 (NEOLOGY, INC.) 17 June 2010 (2010-06-17) see entire document | 1-81 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 October 2022** | **28 October 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
|---|
| **PCT/CN2022/109094** |

| Patent document cited in search report | | | Publication date (day/month/year) | Patent family member(s) | | | Publication date (day/month/year) |
|---|---|---|---|---|---|---|---|
| CN | 109819444 | A | 28 May 2019 | None | | | |
| CN | 109274493 | A | 25 January 2019 | None | | | |
| CN | 108199991 | A | 22 June 2018 | None | | | |
| US | 2010150348 | A1 | 17 June 2010 | WO | 2009097577 | A1 | 06 August 2009 |
| | | | | US | 2014341379 | A1 | 20 November 2014 |
| | | | | US | 2018109522 | A1 | 19 April 2018 |
| | | | | US | 2016261591 | A1 | 08 September 2016 |
| | | | | EP | 2247986 | A1 | 10 November 2010 |

Form PCT/ISA/210 (patent family annex) (January 2015)